# EUROPEAN PATENT SPECIFICATION

(11) **EP 1 401 948 B1**
(45) Date of publication and mention of the grant of the patent: **31.12.2008**
(21) Application number: 02764594.4
(22) Date of filing: 20.06.2002
(51) Int. Cl.: C08K 13/02

(54) **ADDITIVE FUNCTIONALIZED ORGANOPHILIC NANO-SCALED FILLERS**
FUNKTIONALISIERTE ORGANOPHILE NANOSKALIERTE FÜLLSTOFFE
AGENTS DE REMPLISSAGE ORGANOPHILES NANOMETRIQUES FONCTIONNALISES PAR UN ADDITIF

(30) Priority: 29.06.2001 EP 01810634
(43) Date of publication of application: 31.03.2004
(73) Proprietor: Ciba Holding Inc., 4057 Basel (CH)
(72) Inventor: CAMENZIND, Hugo, CH-3014 Bern (CH); HERBST, Heinz, 79541 Lörrach (DE); WUNDERLICH, Wiebke, I-40134 Bologna (IT)
(86) International application number: PCT/EP2002/006848
(87) International publication number: WO 2003/002652

(56) References cited:
- EP-A- 0 732 361
- EP-A- 0 810 259
- GB-A- 2 247 681
- US-A- 4 467 061
- US-A- 5 096 781
- DATABASE WPI Section Ch, Week 199024 Derwent Publications Ltd., London, GB; Class A18, AN 1990-181491 XP002219226 & JP 02 117934 A (SUMITOMO CHEM IND KK), 2 May 1990 (1990-05-02)

## Description

The present invention relates to compositions comprising an organic material subject to oxidative, thermal or light-induced degradation, in particular a synthetic polymer, and at least one product obtainable by reacting a nano-scaled filler with an additive that is linked to a reactive group. The present invention relates also to new products obtainable by reacting a nano-scaled filler with an additive that is linked to a reactive group, to the use of these products as nonvolatile stabilizers or flame retardants for nanocomposite organic materials which are subject to oxidative, thermal or light-induced degradation, in particular to synthetic nanocomposite polymers or coatings, or as photoinitiators for the in-situ polymerization of pre-polymeric nanocomposites or sols to nanocomposite materials. The present invention relates also to a process for stabilizing or flame-retarding a nanocomposite organic material, which is subject to oxidative, thermal or light-induced degradation, in particular a synthetic nanocomposite polymer or coating, or to photoinitiating in-situ polymerization of a pre-polymeric nanocomposite or sol to a nanocomposite material.

The addition of fillers to organic materials, especially polymers, is known and is described for example in R. Gächter/H. Müller (eds.), Plastics Additives Handbook, 3rd ed., pages 525-591, Hanser Publishers, Munich 1990. The use of fillers in polymers has the advantage that it is possible to bring about improvement in, for example, the mechanical properties, especially the density, hardness, rigidity or impact strength of the polymer.

Using extremely small filler particles (< 200 nm), so-called nano-scaled fillers, mechanical properties, long term stability or flame retardant property of the polymers can be improved at a much lower concentration of 5 to 10 % by weight compared to 20 to 50 % by weight with the micro-scaled normal filler particles. Polymers containing nano-scaled fillers show improved surface qualities like gloss, lower tool wear at processing and better conditions for recycling. Coatings and films comprising nano-scaled fillers show improved stability, flame resistance, gas barrier properties and scratch resistance.

Nano-scaled fillers possess an extremely large surface with high surface energy. The deactivation of the surface energy and the compatibilization of the nano-scaled fillers with a polymeric substrate is therefore even more important than with a common micro-scaled filler in order to avoid aggregation and to reach an excellent dispersion of the nano-scaled filler in the polymer. The nano-scaled fillers like the phyllosilicates are made organophilic by ion exchange, for example with alkylammonium salts. Such nano-scaled organophilic phyllosilicates are better swellable and easier to disperse (exfoliate) into a polymer matrix [for example Nanomer^{®} form Nanocor or Closite^{®} from Southern Clay Products].

In the case of precipitated calcium carbonate, organophilization can be achieved by a treatment with an organophilic carboxylic acid [e.g. Socal^{®} (from Solvay), see M. Avella et al, Nano Lett., 1 (4), 2001].

Colloidal silica can be suspended in neutral, reactive (crosslinking) or pre-polymeric diluents resp. monomers or mixtures of all [e.g. Highlink^{®} OG or Klebosol^{®} from Clariant, see C. Vu et al, RadTech'2000, Baltimore], as so called sols.

U.S. 6,020,419 discloses a transparent coating composition containing a binder and 0.5 to 25 weight %, based on resin solids, of a material consisting of nano-scaled particles obtained by jet dispersion of the nano-scaled particles in the coating composition.

WO-A-01/05897 discloses binding agents modified with nano-scaled particles.

Photoinitiators may be covalently coupled to silica gel to initiate the polymerization of for example acrylates, methacrylates or styrene from the silica gel surface [see for example M. Koehler; J. Ohngemach, ACS Symp. Ser. 1990, 417 (Radiat. Curing Polym. Mater.), 106 - 24, "coreactive photoinitiators for surface polymerization"]. p-Substituted 2-hydroxy-2-methy-propiophenone photoinitiators are disclosed, and the photoinitiators are covalently coupled to silica gel via the p-substituted groups; the anchored photoinitiators were then used to initiate polymerization from the silica gel surface. The p-substituted groups included triethoxysilyl, epoxy, or azido groups. The initiators are used to polymerize either acrylates, methacrylates, styrene, or N-vinylpyrrolidone. The influences of monomer type, monomer concentration and initiator type on polymerisation kinetics are examined.

Hybrid type of photoinitiators containing polysiloxane groups have been described to be used for scratch-resistant radiocurable coatings.

It has now been found that specifically modified, especially organophilic, nano-scaled fillers which contain an additive selected from the group of radical scavengers, hydroperoxide decomposers, UV-absorbers or flame retardants are especially useful as stabilizers or flame retardants for nanocomposite organic materials which are subject to oxidative, thermal or light-induced degradation. Modified nano-scaled fillers which contain a photoinitiator are especially useful for the in-situ polymerization of pre-polymeric nanocomposites or sols to nanocomposite materials.

This invention therefore relates to a composition comprising
a) an organic material subject to oxidative, thermal or light-induced degradation,
b) at least one product obtainable by reacting a nano-scaled filler with a compound of the formula I

   AD-L-RG (I)

   wherein
   AD is an additive selected from the group of radical scavengers, hydroperoxide decomposers, UV-absorbers, light stabilizers, flame retardants or photoinitiators,
   L is a direct bond, 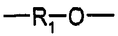 or 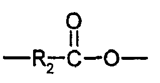 with the proviso that the oxygen atom is attached to AD; C₁-C₂₅alkylene, C₂-C₂₅alkylene interrupted by -O-, -S-, -SO-, - SO₂-, 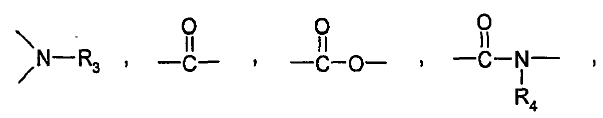 phenylene or C₅-C₈cycloalkylene; or a block-graft copolymer,
   RG is 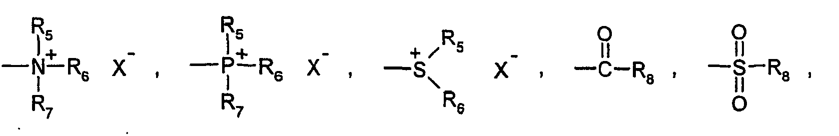 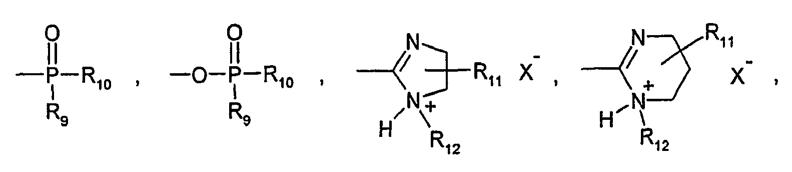 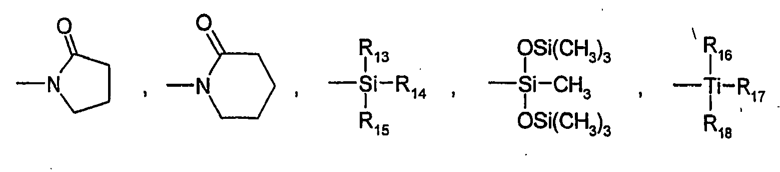 or 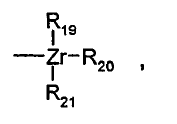 wherein
      R₁ is C₁-C₁₈alkylene,
      R₂ is a direct bond or C₁-C₁₈alkylene,
      R₃ is hydrogen or C₁-C₈alkyl,
      R₄ is hydrogen or C₁-C₄alkyl,
      R₅, R₆ and R₇ are each independently of the others hydrogen, C₁-C₂₅alkyl, phenyl or C₇-C₂₅phenylalkyl,
      R₈, R₉ and R₁₀ are each independently of the others hydroxyl, 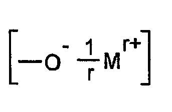 or 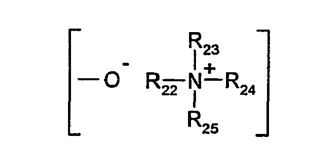
      R₁₁ is hydrogen or C₁-C₂₅alkyl,
      R₁₂ is hydrogen or C₁-C₂₅alkyl, C₃-C₂₅alkyl interrupted by oxygen, sulfur or by 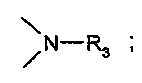 or C₂-C₂₄alkenyl,
      R₁₃, R₁₄ and R₁₅ are each independently of the others halogen, amino, C₁-C₂₅alkoxy or C₁-C₂₅alkyl, with the proviso that at least one radical of R₁₃, R₁₄ and R₁₅ is different from C₁-C₂₅alkyl,
      R₁₆, R₁₇ and R₁₈ are each independently of the others C₁-C₁₂alkoxy or C₂-C₂₅alkanoyloxy,
      R₁₉, R₂₀ and R₂₁ are each independently of the others C₁-C₁₂alkoxy, C₂-C₂₅alkanoyloxy or benzoyloxy,
      R₂₂, R₂₃, R₂₄ and R₂₅ are each independently of the others hydrogen, C₁-C₂₅alkyl or hydroxyl-substituted C₂-C₂₄alkyl,
      M is a r-valent metal cation,
      X- is fluoride, chloride, bromide, iodide, nitrite, nitrate, hydroxide, acetate, hydrogen sulfate, sulfate, methyl sulfate or mixtures thereof, and
      r is 1,2or3.

Of interest are also products obtainable by reacting a nano-scaled filler with a compound of the formula I, wherein
AD is an additive selected from the group of radical scavengers, hydroperoxide decomposers, UV-absorbers, light stabilizers, flame retardants or photoinitiators,
L is a direct bond, 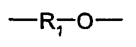 with the proviso that the oxygen atom is attached to AD, 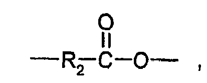 C₁-C₂₆alkylene, C₂-C₂₅alkylene interrupted by -O-, -S-, -SO-, -SO₂-, 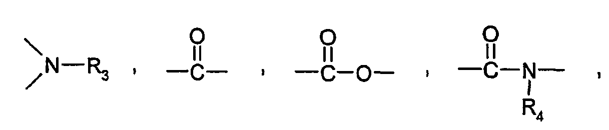 phenylene or C₅-C₈cycloalkylene;
or a maleic anhydride-grafted polypropylene,
RG is 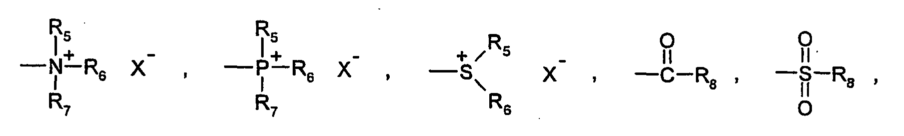 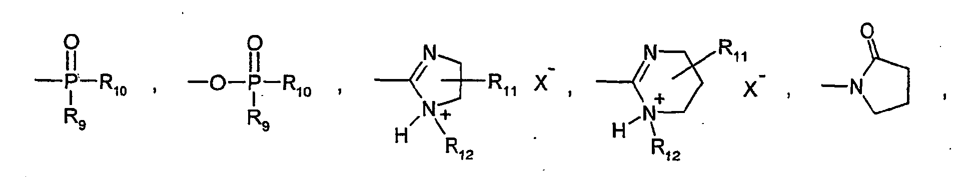 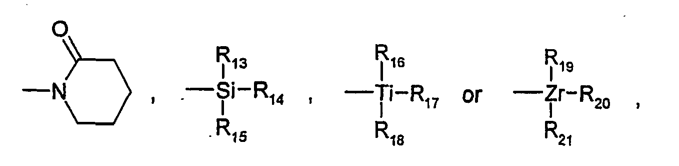 wherein
R₁ is C₁-C₁₈alkylene,
R₂ is a direct bond or C₁-C₁₈alkylene,
R₃ is hydrogen or C₁-C₈alkyl,
R₄ is hydrogen or C₁-C₄alkyl,
R₅, R₆ and R₇ are each independently of the others hydrogen, C₁-C₂₅alkyl, phenyl or C₇-C₂₅phenylalkyl,
R₈, Rg and R₁₀ are each independently of the others hydroxyl, 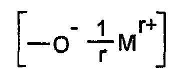 or 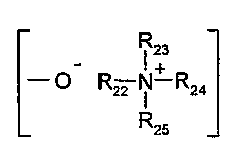
R₁₁ is hydrogen or C₁-C₂₅alkyl,
R₁₂ is hydrogen or C₁-C₂₅alkyl, C₃-C₂₅alkyl interrupted by oxygen, sulfur or by 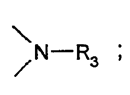 or C₂-C₂₄alkenyl,
R₁₃, R₁₄ and R₁₅ are each independently of the others halogen, amino, C₁-C₂₅alkoxy or C₁-C₂₅alkyl, with the proviso that at least one radical of R₁₃, R₁₄ and R₁₅ is different from C₁-C₂₅alkyl,
R₁₆, R₁₇ and R₁₈ are each independently of the others C₁-C₁₂alkoxy or C₂-C₂₅alkanoyloxy, R₁₉, R₂₀ and R₂₁ are each independently of the others C₁-C₁₂alkoxy, C₂-C₂₅alkanoyloxy or benzoyloxy,
R₂₂, R₂₃, R₂₄ and R₂₅ are each independently of the others hydrogen, C₁-C₂₅alkyl or hydroxyl-substituted C₂-C₂₄alkyl,
M is a r-valent metal cation,
X⁷ is fluoride, chloride, bromide, iodide, nitrite, nitrate, hydroxide, acetate, hydrogen sulfate, sulfate, methyl sulfate or mixtures thereof, and
r is 1, 2 or 3.

C₁-C₂₅Alkylene is a branched or unbranched radical, for example methylene, ethylene, propylene, trimethylene, tetramethylene, pentamethylene, hexamethylene, heptamethylene, octamethylene, decamethylene, dodecamethylene or octadecamethylene. A preferred definition for L, R₁ and R₂ is C₁-C₁₂alkylene, especially C₁-C₈alkylene, for example C₂-C₈alkylene.

C₂-C₂₅alkylene interrupted by -O-, -S-, -SO-, -SO₂-, , 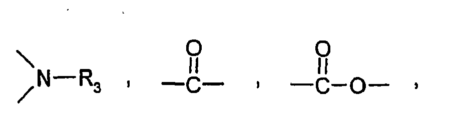 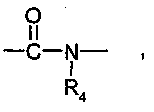 phenylene or C₅-C₈cycloalkylene is, for example, -CH₂-O-CH₂-, -CH₂-S-CH₂-, -CH₂-N(CH₃)-CH₂-, -CH₂-O-CH₂CH₂-, -CH₂CH₂-O-CH₂CH₂-, -CH₂CH₂-O-CH₂CH₂-O-CH₂CH₂- , -CH₂CH₂-(O-CH₂CH₂-)₂O-CH₂CH₂-, -CH₂CH₂-(O-CH₂CH₂-)₃O-CH₂CH₂-, -CH₂CH₂-(O-CH₂CH₂-)₄O-CH₂CH₂- -CH₂CH₂-S-CH₂CH₂-, 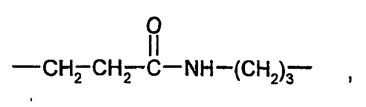 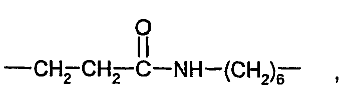 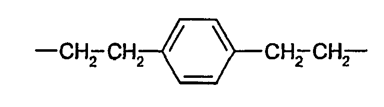 or

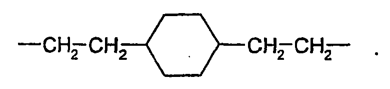

Alkyl having up to 25 carbon atoms is a branched or unbranched radical, for example methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl, octadecyl, icosyl or docosyl.

C₇-C₉Phenylalkyl is, for example; benzyl, α-methylbenzyl, α,α-dimethylbenzyl or 2-phenylethyl. Preference is given to benzyl and α,α-dimethylbenzyl.

C₃-C₂₅Alkyl interrupted by oxygen, sulfur or by 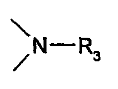 is, for example, CH₃-O-CH₂CH₂-, CH₃-S-CH₂CH₂-, CH₃-N(CH₃)-CH₂CH₂- , CH₃-O-CH₂CH₂-O-CH₂CH₂-, CH₃-(O-CH₂CH₂-)₂O-CH₂CH₂- , CH₃-(O-CH₂CH₂-)₃O-CH₂CH₂- or CH₃-(O-CH₂CH₂-)₄O-CH₂CH₂-.

Alkenyl having 2 to 24 carbon atoms is a branched or unbranched radical such as, for example, vinyl, propenyl, 2-butenyl, 3-butenyl, isobutenyl, n-2,4-pentadienyl, 3-methyl-2-butenyl, n-2-octenyl, n-2-dodecenyl, iso-dodecenyl, oleyl, n-2-octadecenyl or n-4-octadecenyl. Preference is given to alkenyl having 3 to 18, especially 3 to 12, for example 3 to 6, especially 3 to 4 carbon atoms.

Halogen is, for example, chlorine, bromine or iodine. Preference is given to chlorine and bromine.

Alkoxy having up to 25 carbon atoms is a branched or unbranched radical, for example methoxy, ethoxy, propoxy, isopropoxy, n-butoxy, isobutoxy, pentyloxy, isopentyloxy, hexyl-oxy, heptyloxy, octyloxy, decyloxy, tetradecyloxy, hexadecyloxy or octadecyloxy. Preference is given to alkoxy having from 1 to 12, especially from 1 to 8, e.g. from 1 to 6, carbon atoms.

Alkanoyloxy having up to 25 carbon atoms is a branched or unbranched radical, for example acetoxy, propionyloxy, butanoyloxy, pentanoyloxy, hexanoyloxy, heptanoyloxy, octanoyloxy, nonanoyloxy, decanoyloxy, undecanoyloxy, dodecanoyloxy, tridecanoyloxy, tetradecanoyl-oxy, pentadecanoyloxy, hexadecanoyloxy, heptadecanoyloxy, octadecanoyloxy, icosanoyl-oxy or docosanoyloxy. Preference is given to alkanoyloxy having from 2 to 18, especially from 2 to 12, e.g. from 2 to 6, carbon atoms.

Hydroxyl-substituted C₂-C₂₄alkyl is a branched or unbranched radical which contains preferably 1 to 3, in particular 1 or 2, hydroxyl groups, such as, for example, hydroxyethyl, 3-hydroxypropyl, 2-hydroxypropyl, 4-hydroxybutyl, 3-hydroxybutyl, 2-hydroxybutyl, 5-hydroxypentyl, 4-hydroxypentyl, 3-hydroxypentyl, 2-hydroxypentyl, 6-hydroxyhexyl, 5-hydroxyhexyl, 4-hydroxyhexyl, 3-hydroxyhexyl, 2-hydroxyhexyl, 7-hydroxyheptyl, 6-hydroxyheptyl, 5-hydroxyheptyl, 4-hydroxyheptyl, 3-hydroxyheptyl, 2-hydroxyheptyl, 8-hydroxyoctyl, 7-hydroxyoctyl, 6-hydroxyoctyl, 5-hydroxyoctyl, 4-hydroxyoctyl, 3-hydroxyoctyl, 2-hydroxyoctyl, 9-hydroxynonyl, 10-hydroxydecyl, 11-hydroxyundecyl, 12-hydroxydodecyl, 13-hydroxytridecyl, 14-hydroxytet-radecyl, 15-hydroxypentadecyl, 16-hydroxyhexadecyl, 17-hydroxyheptadecyl, 18-hydroxy-octadecyl, 20-hydroxyeicosyl or 22-hydroxydocosyl. A preferred definition of R₂₂, R₂₃, R₂₄ and R₂₅ is hydroxyl-substituted C₂-C₁₂alkyl, especially hydroxyl-substituted C₄-C₈alkyl.

A mono-, di- or tri-valent metal cation is preferably an alkali metal cation, alkaline earth metal cation or aluminium cation, for example Na⁺, K⁺, Mg⁺⁺, Ca⁺⁺ or Al⁺⁺⁺.

Block-graft copolymers are for example maleic anhydride-grafted polypropylene (PP-g-MA), ithaconic acid-grafted polypropylene , acrylic acid-grafted polypropylene or polyethyleneoxide-block-polystyrene (PEO-bl-PS). Preferably, block-graft copolymers have molecular weights of Mₙ 1000 to 10000, and for the maleic anhydride modified polypropylene oligomers (PP-g-MA) the maleic anhydride content is from 1 to 10% [for example Epolene^{®} E43, MA content 2.9 weight %, Mn 8800 (Eastman); Hostaprime^{®} HC5, MA content 4.2 weight %, Mn 4000].

The nano-scaled filler have a particle size below 200 nm, preferably below 100 nm and more preferably below 50 nm.

Nano-scaled fillers of special interest are nano-scaled oxides made by gas-phase or sol-gel processes, for example SiO₂, SiO₂ [e.g. Aerosil^{®} from Degussa; Ludox^{®} from DuPont; Snow-tex^{®} from Nissan Chemical; Levasil^{®} from Bayer; or Sylysia^{®} from Fuji Silysia Chemical], TiO₂ [e.g. NanoTek^{®} from Nanophase], ZrO₂, SnO₂, MgO, ZnO [e.g. Activox^{®} B or Durhan^{®} TZO from Elementis], CeO₂, Al₂O₃, In₂O₃ or mixed oxides, including colloidal silica [e.g.Klebo-sol®], or organosols [e.g. Hilink^{®} OG from Clariant], or polyhedral oligomeric silsesquioxanes [e.g. POSS^{®} from Hybrid Plastics] with compatibilizing or reactive organic modifications like hydrocarbon, silane or siloxane chains, with or without functional groups such as hydroxyl, amino, mercapto, epoxy or ethylenic groups, or natural or modified semi-synthetic or synthetic [e.g. Somasif® from CO-OP Chemicals] phyllosilicates, organophilic precipitated calcium carbonate [e.g. Socal^{®} from Solvay] or anion exchanging hydrotalcite [e.g. Hycite^{®}713 from Ciba Specialty Chemicals].

Preferred fillers organophilically modified natural or synthetic phyllosilicates or a mixture of such phyllosilicates. Especially preferred fillers are organophilically modified montmorillonites [e.g. Nanomer^{®} from Nanocor or Nanofil^{®} from Suedchemie], bentonites [e.g. Cloisite^{®} from Southern Clay Products], beidellites, hectorites, saponites, nontronites, sauconites, vermiculites, ledikites, magadiites, kenyaites or stevensites.

Of special interest are products obtainable by reacting a nano-scaled filler with a compound of the formula I, wherein AD is an additive selected from the group of phenolic antioxidants, benzofuran-2-ones, sterically hindered amines, aminic antioxidants, 2-(2'-hydroxyphenyl)-benzotriazoles, 2-hydroxybenzophenones, 2-(2-hydroxyphenyl)-1,3,5-triazines, phosphites, phosphonites, thioethers, benzophenones, α-activated acetophenones, bisacylphosphinoxides (BAPO), monoacylphosphinoxides (MAPO), alkoxamines, thioxanthones, benzoins, benzil ketals, benzoin ethers, α-hydroxy-alkylphenones or α-aminoalkylphenones.

Of very special interest are products obtainable by reacting a nano-scaled filler with a compound of the formula I, wherein AD is 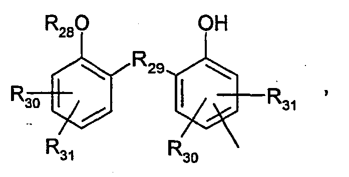 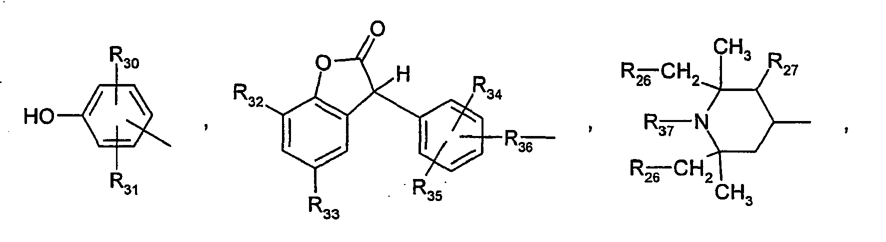 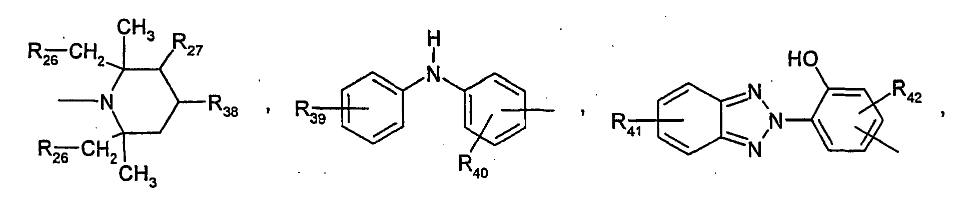 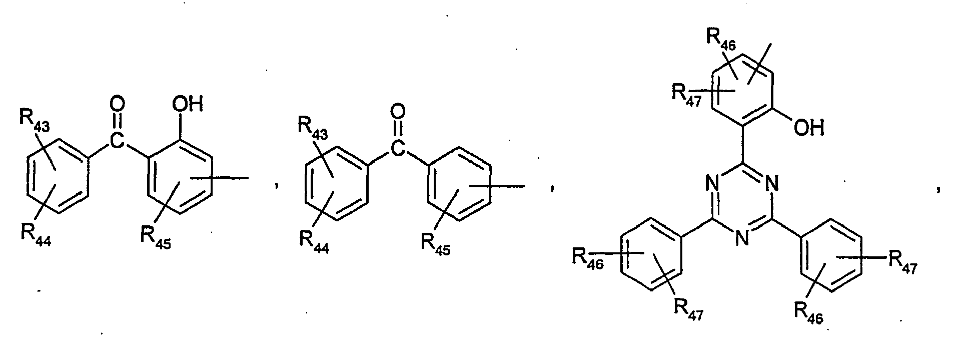 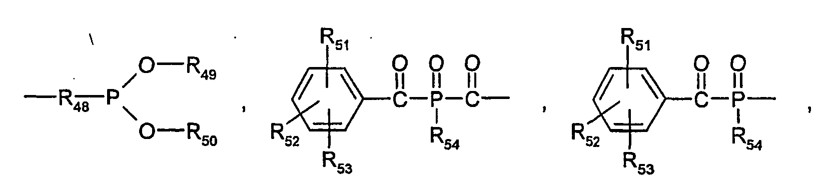 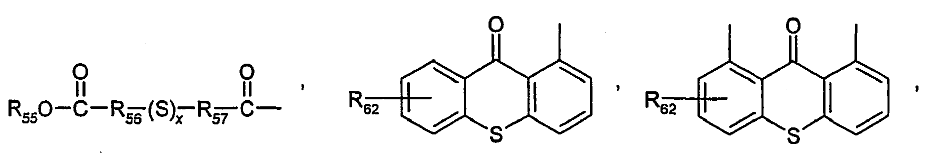 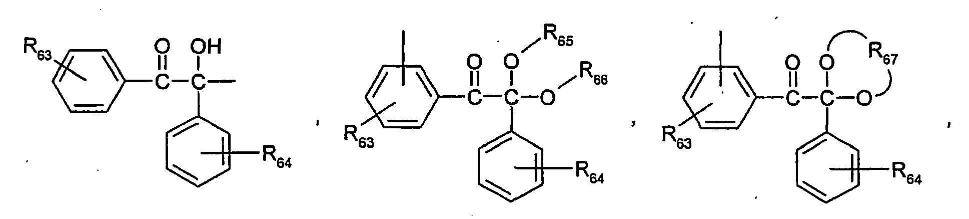 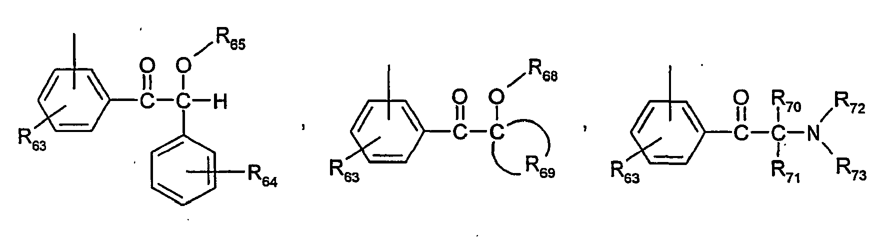 or 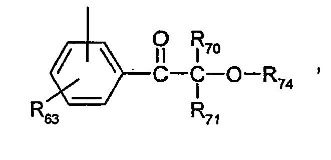 wherein
R₂₆ is hydrogen or methyl,
R₂₇ is hydrogen or methyl,
R₂₈ is hydrogen or 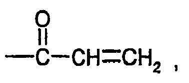
R₂₉ is C₁-C₄alkylene,
R₃₀ and R₃, are each independently of the other hydrogen, C₁-C₁₈alkyl, C₇-C₉phenylalkyl, phenyl or C₅-C₈cycloalkyl,
R₃₂ and R₃₃ are each independently of the other hydrogen, C₁-C₁₈alkyl, C₇-C₉phenylalkyl, phenyl or C₅-C₈cycloalkyl,
R₃₄ and R₃₅ are each independently of the other hydrogen, halogen, C₁-C₄alkyl, -CN, trifluoromethyl or C₁-C₄alkoxy,
R₃₆ is a direct bond or -O-,
R₃₇ is hydrogen, -O', C₁-C₂₅alkyl, C₂-C₂₀alkenyl, C₂-C₂₀alkinyl, C₁-C₂₀alkoxy, C₅-C₁₂cycloalk-oxy, C₇-C₂aralkoxy, C₆-C₁₂aryloxy, C₇-C₉phenylalkyl, C₅-C₁₂cycloalkyl, phenyl, naphthyl, hydroxyethyl, C₂-C₂₅alkanoyl, benzoyl, naphthoyl or C₂-C₂₀alkoxyalkanoyl,
R₃₈ is hydrogen or an organic radical,
R₃₉ and R₄₀ are each independently of the other hydrogen, C₁-C₁₈alkyl, C₇-C₉phenylalkyl or phenyl,
R₄₁ is hydrogen, halogen or C₁-C₁₈alkyl,
R₄₂ is hydrogen, C₁-C₁₈alkyl or C₇-C₉phenylalkyl,
R₄₃ and R₄₄ are each independently of the other hydrogen, C₁-C₁₈alkyl, C₁-C₁₈alkoxy, di(C₁-C₄alkyl)amino, hydroxyl or 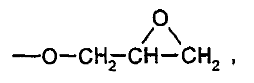
R₄₅ is hydrogen, C₁-C₁₈alkyl, C₁-C₁₈alkoxy or 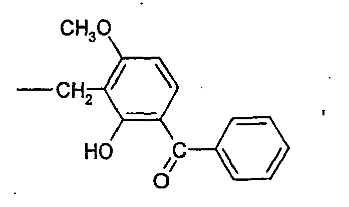
R₄₆ and R₄₇ are each independently of the other hydrogen, hydroxyl, C₁-C₁₈alkyl, phenyl, C₁-C₁₈alkoxy or C₇-C₉phenylakyl,
R₄₈ is a direct bond or oxygen,
R₄₉ and R₅₀ are each independently of the other C₁-C₁₈alkyl, C₇-C₉phenylalkyl, cyclohexyl, phenyl, or phenyl substituted by 1 to 3 alkyl radicals having in total 1 to 18 carbon atoms,
R₅₁, R₅₂ and R₅₃ are each independently of the others hydrogen, halogen C₁-C₄alkyl or C₁-C₄alkoxy,
R₅₄ is C₁-C₂₀alkyl, C₅-C₈cycloalkyl, C₇-C₉phenylalkyl or phenyl,
R₅₅ is C₁-C₂₅alkyl,
R₅₆ is methylene or ethylene,
R₅₇ is methylene or ethylene,
R₆₂ is hydrogen or C₁-C₁₈alkyl,
R₆₃ and R₆₄ are each independently of the other hydrogen, C₁-C₁₈alkyl, C₁-C₁₈alkoxy, C₁-C₄alkylthio, morpholinyl, C₇-C₉phenylalkyl of phenyl,
R₆₅ and R₆₆ are each independently of the other C₁-C₁₈alkyl,
R₆₇ is C₂-C₄alkylene,
R₆₈ is hydrogen or C₁-C₁₈alkyl,
R₆₉ is C₃-C₇alkylene,
R₇₀ and R₇₁ are each independently of the other C₁-C₈alkyl or C₇-C₉phenylalkyl,
R₇₂ and R₇₃ are each independently of the other C₁-C₈alkyl or R₇₂ and R₇₃ are together -CH₂CH₂-O-CH₂CH₂- thus forming with the nitrogen atom to which they are attached a morpholinyl ring,
R₇₄ is hydrogen, C₁-C₁₈alkyl or C₇-C₉phenylalkyl, and
x is 1, 2 or 3.

Especially preferred compounds of the formula I are:

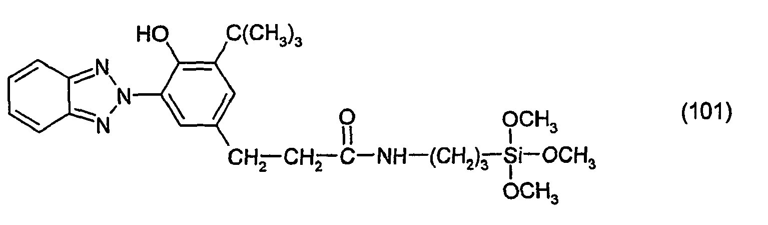

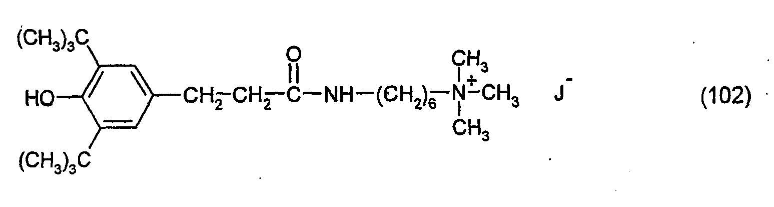

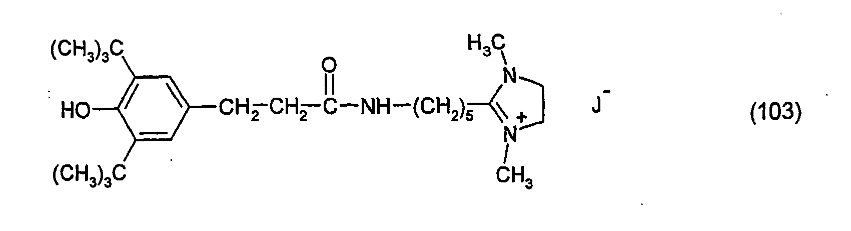

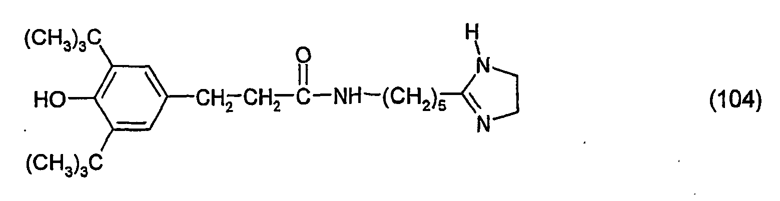

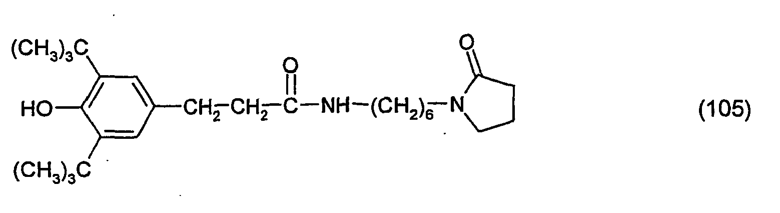

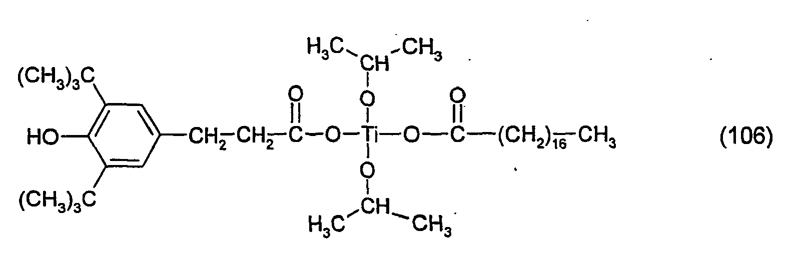

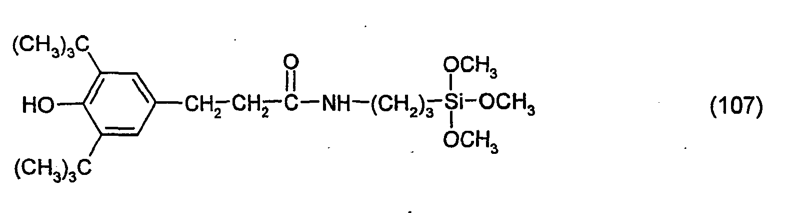

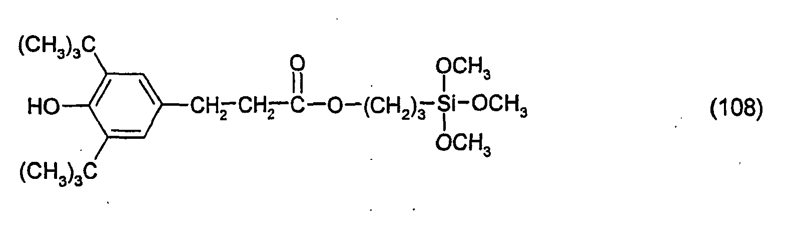

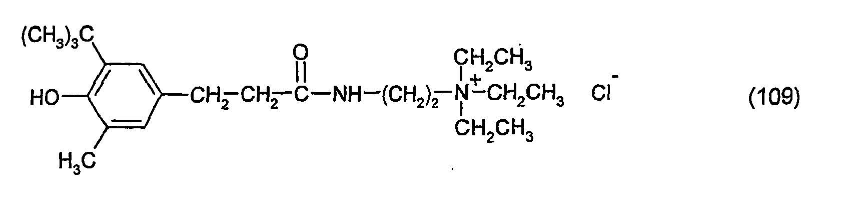

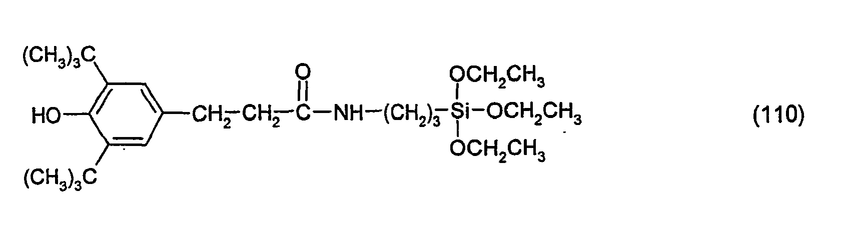

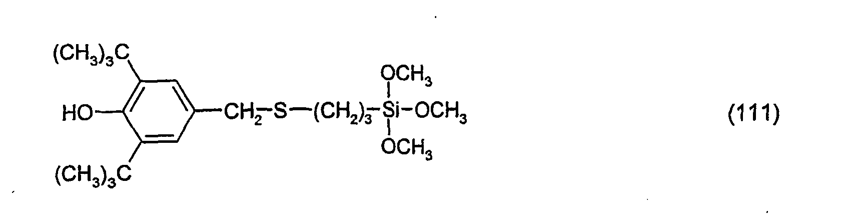

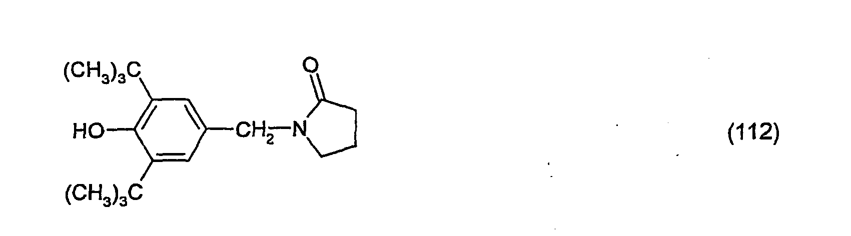

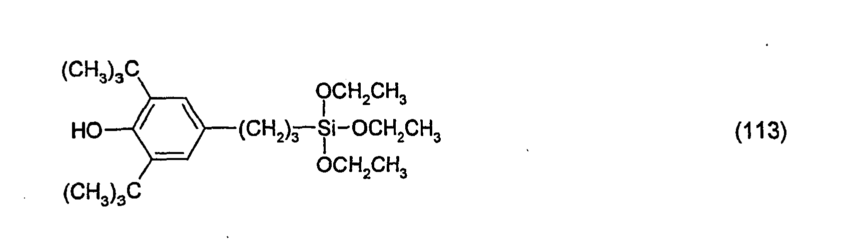

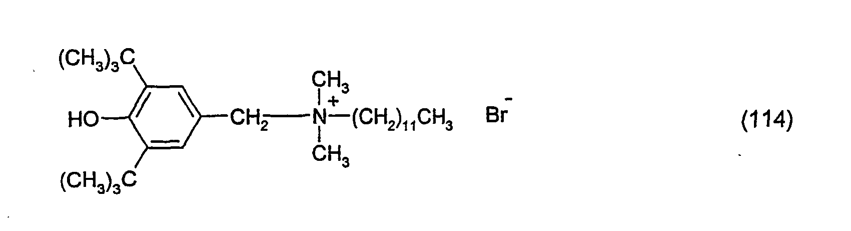

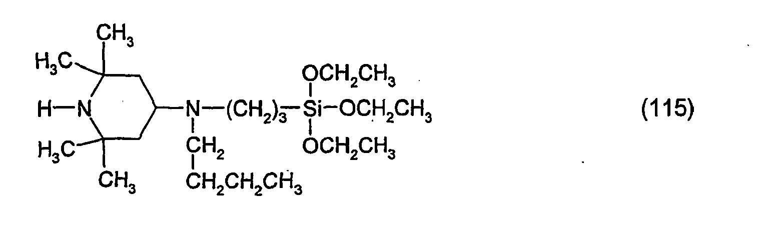

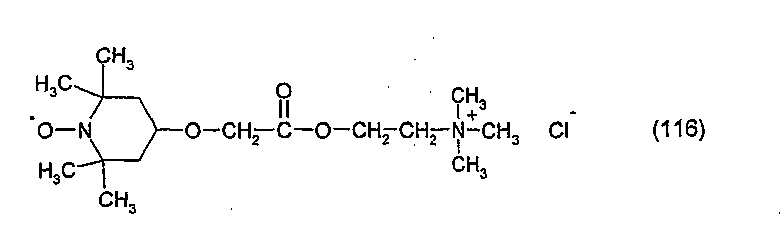

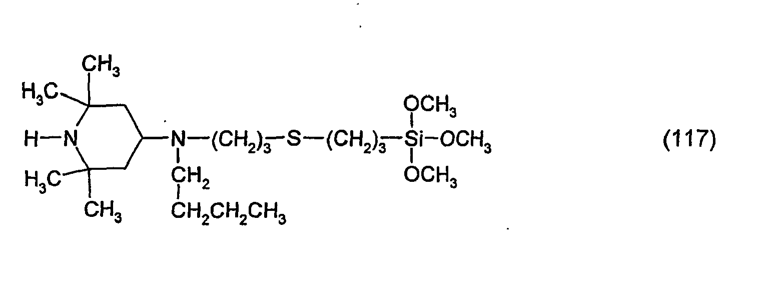

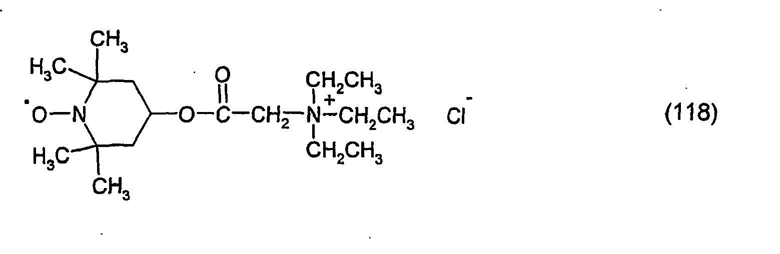

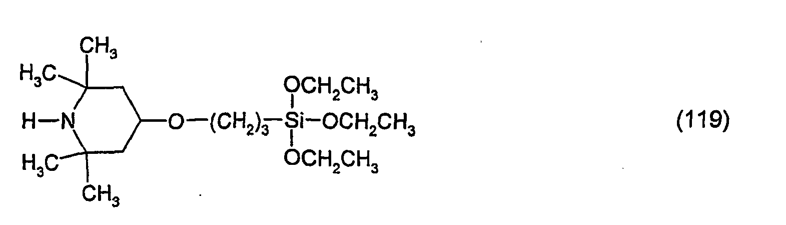

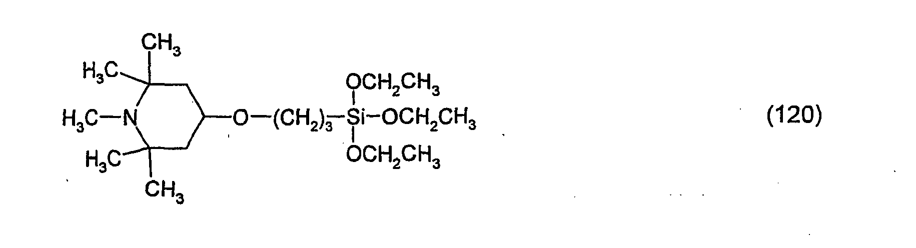

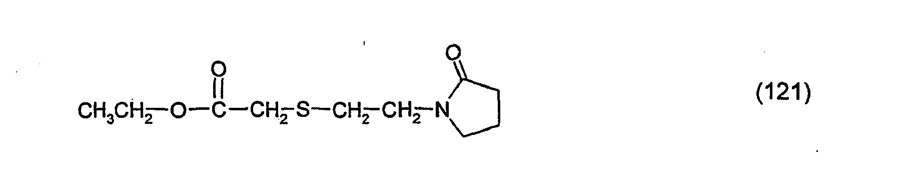

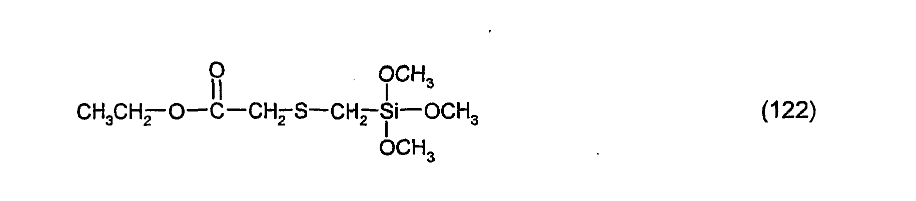

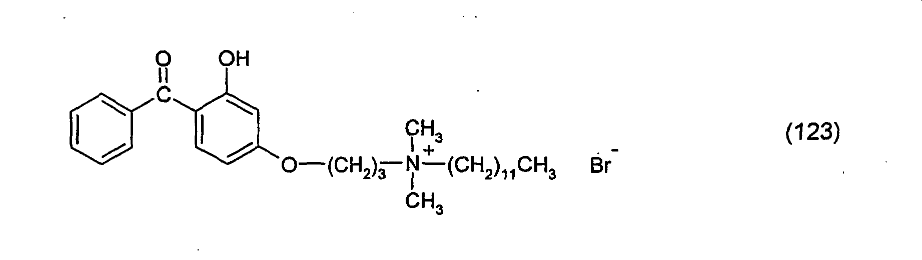

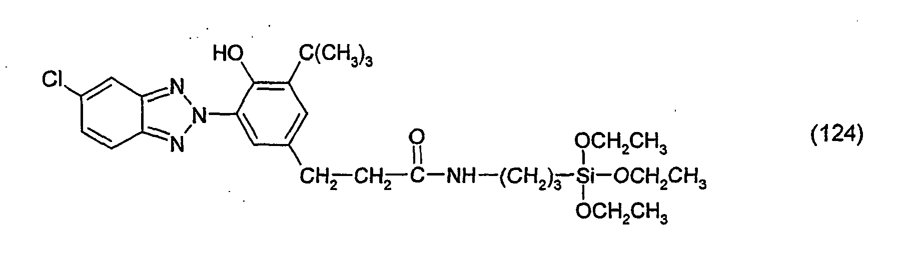

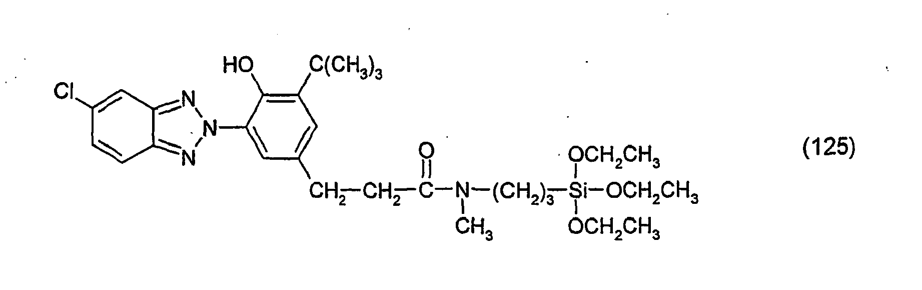

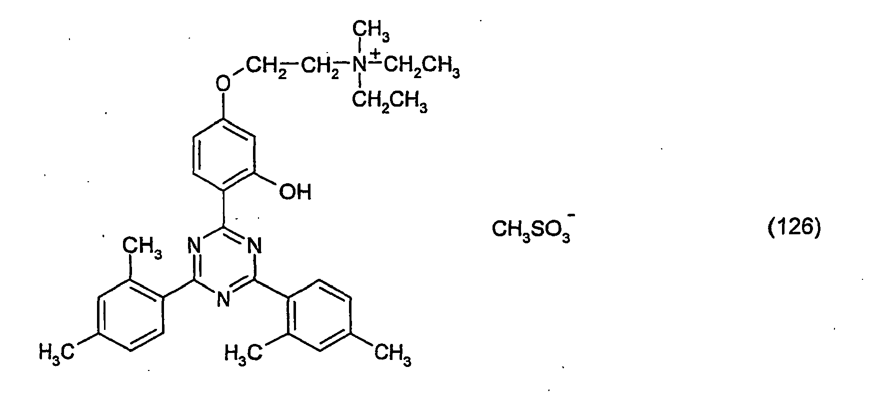

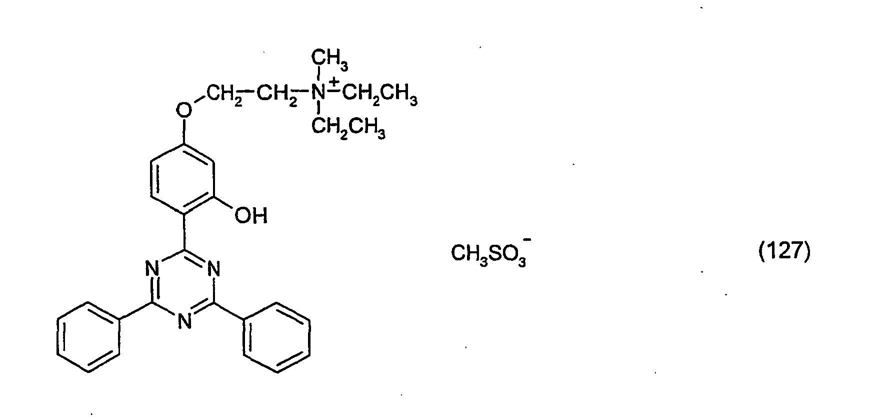

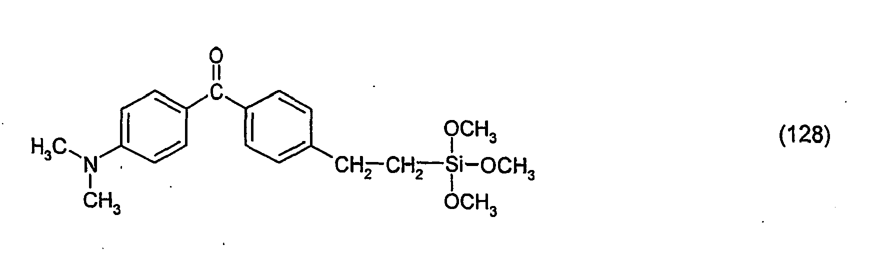

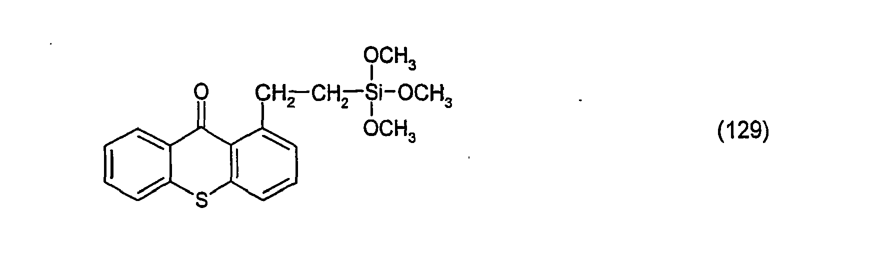

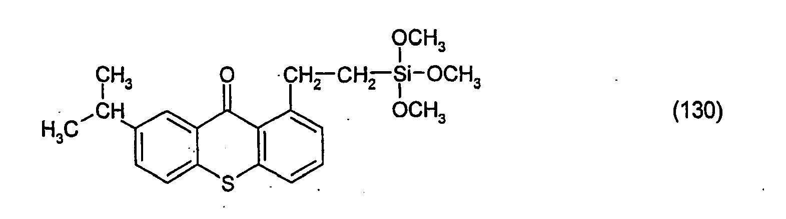

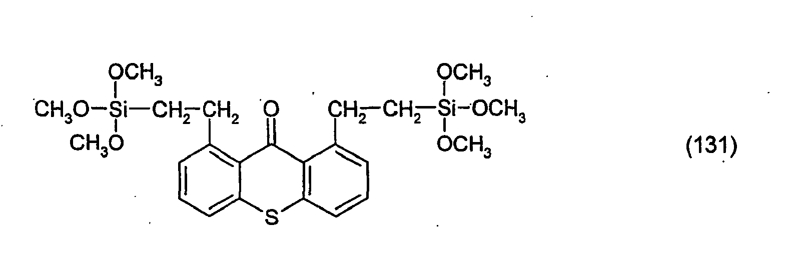

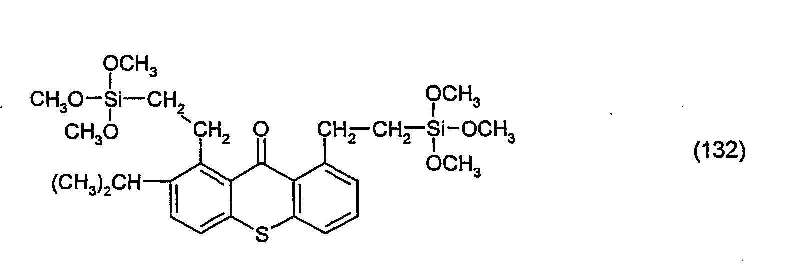

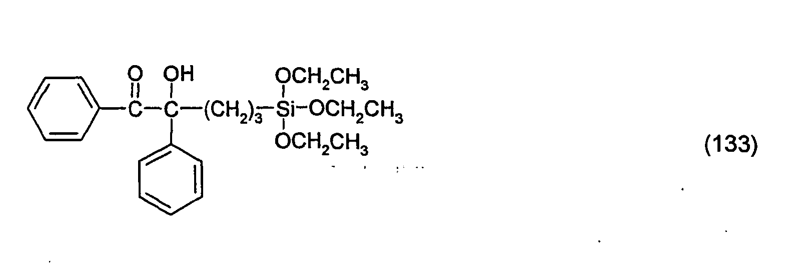

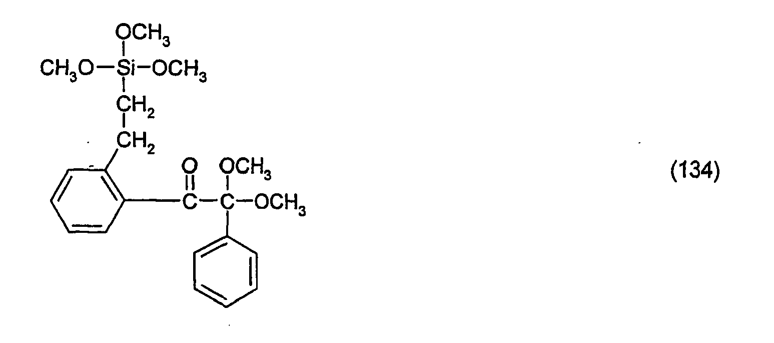

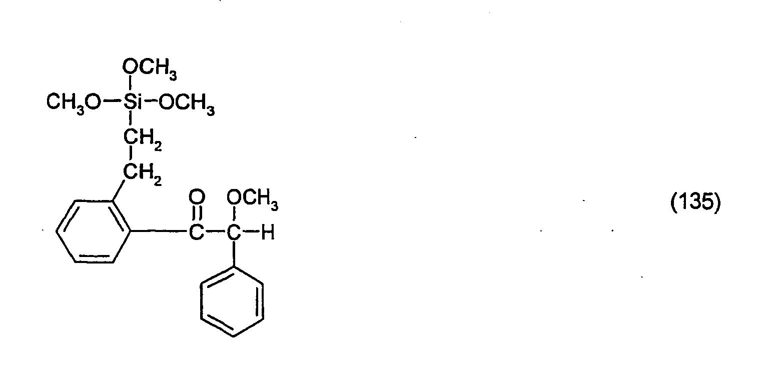

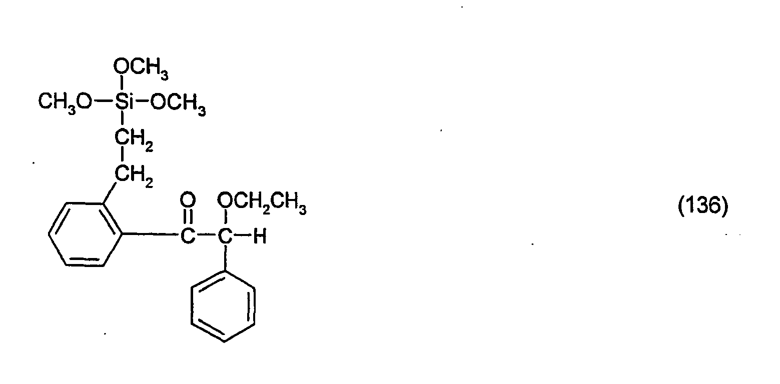

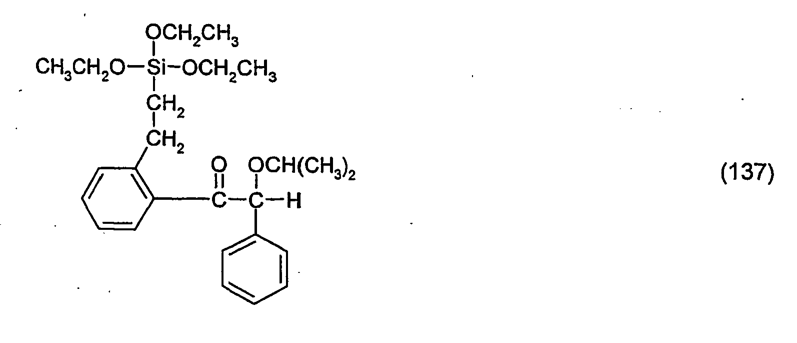

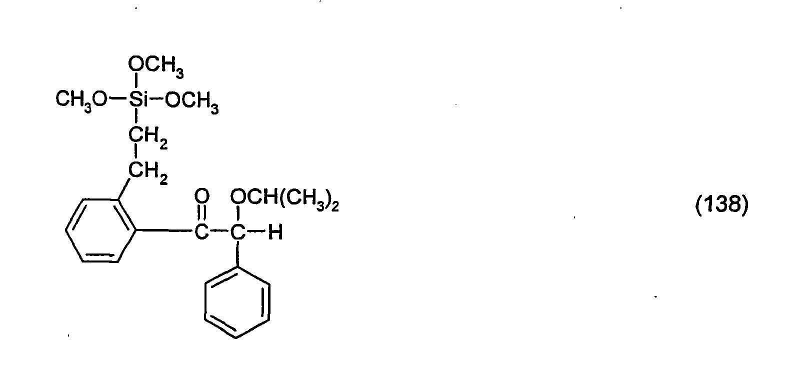

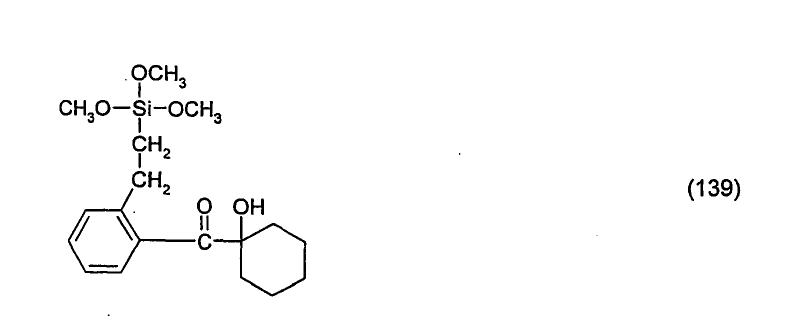

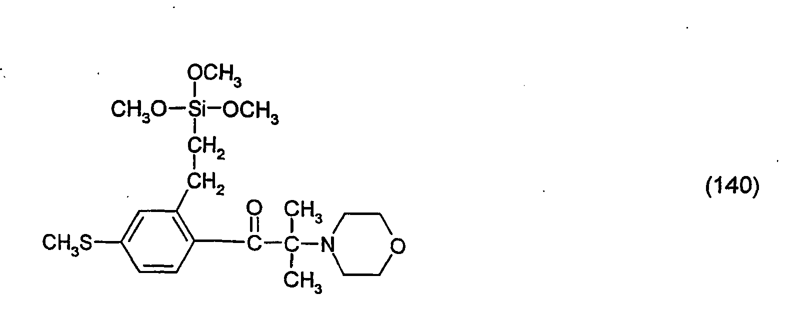

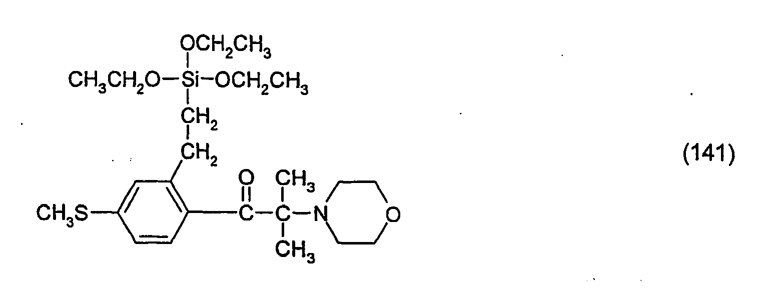

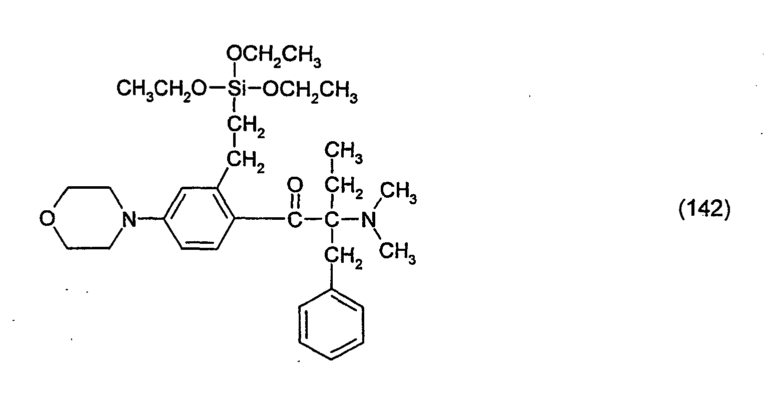

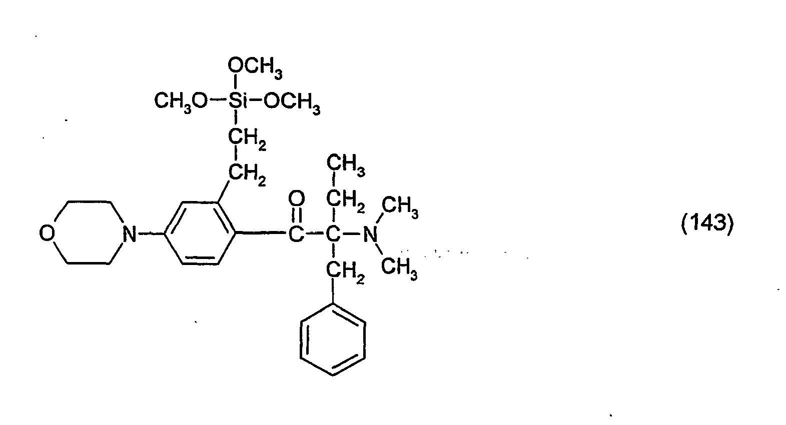

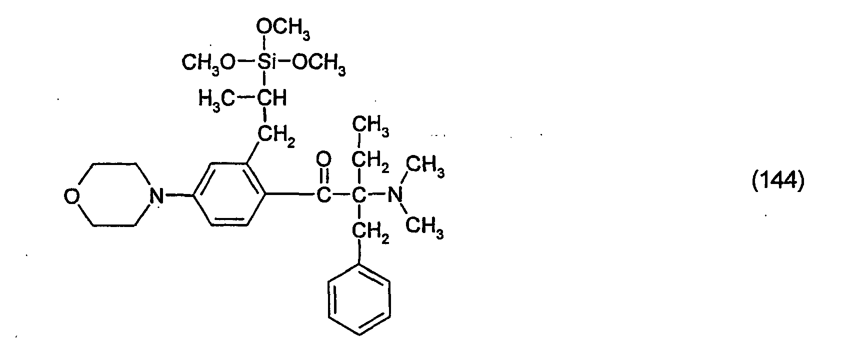

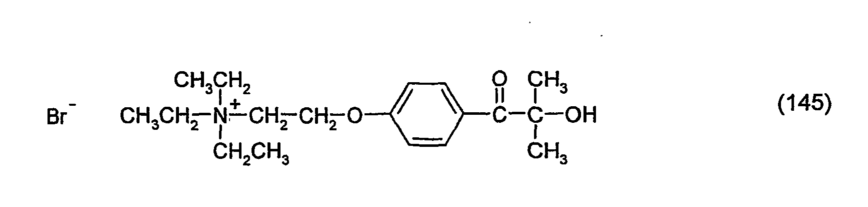

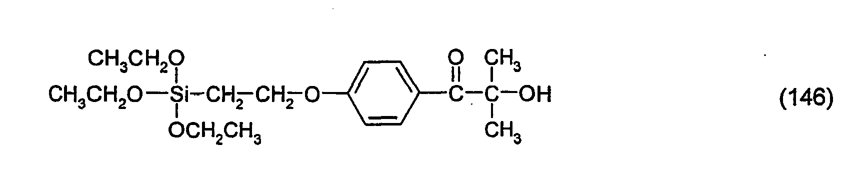

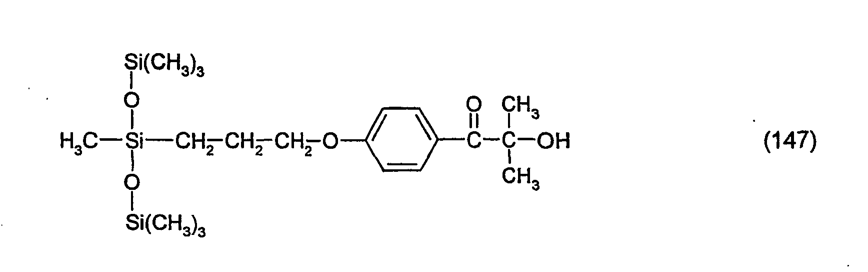

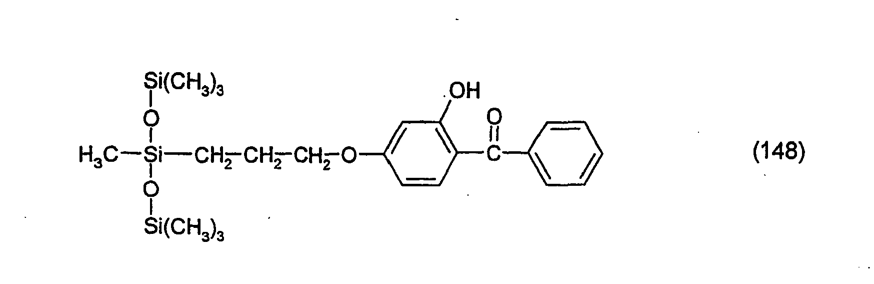

Many of the compounds of the formula I are known in the literature like for example the above mentioned compounds (108) to (148). The new compounds of the formula I may be prepared in analogy to the preparation of the known compounds (108) to (148).

The preparation of component (b) by the reaction of a compound of the formula I with a nano-scaled filler, in its unmodified state or after an organophilic modification, is carried out in a well stirred suspension or solution in a suitable protic or aprotic solvent, such as water, ethanol or xylene.

The pH is adjusted in the range of pH 11 and pH 3, in particular between pH 9 and 4.

The reaction is carried out at temperatures of from 20 to 150°C, for example, in particular at from 50 to 150°C, e.g. at from 50 to 100°C.

During the reaction it is preferable that the compound of formula I is used in excess in respect to the calculated amount to be covalently bound, complexingly coordinated or adsorbed to the nano-scaled filler, e.g. in a molar excess to the cationic respectively anionic exchange capacity in case of phyllosilicates respectively hydrotalcites.

After the reaction the product is preferably isolated, for example, by filtration or centrifugation and, especially preferred, by additional washing steps to extract the non reacted excess of the compound of the formula I.

The amount of covalently bound, complexingly coordinated or adsorbed compound of the formula I is preferably calculated indirectly by subtraction of the extracted amount. In cases of colloidal suspensions of nano-scaled fillers in neutral, reactive or pre-polymeric diluents respectively monomers, or mixtures of all, the compounds of the formula I are preferably directly added and reacted, before further utilization of the such functionalized colloidal suspensions or sols. A specifically preferred molar ratio of the compound of the formula I to the nano-scaled filler is from 1.05 : 1 to 1.5 : 1.

The compound of the formula I can also be reacted with a nano-scaled filler during the organophilic modification of the filler [see e.g. P. Reichert, et al, Macromol. Mat. Eng. 275, 8 -17 (2000)].

When the compound of formula I is of the character of a modified block-graft copolymer, like for example a functionalized maleic acid anhydride modified polypropylene oligomer (for example Epolene^{®} E43 or Hostaprime^{®} HC5) compatibilizer it can also be added during (melt)processing of the nanocomposite polymeric material.

The products obtainable by reacting a nano-scaled filler with a compound of the formula I are suitable for stabilizing or flame-retarding nanocomposite organic materials, which are subject to oxidative, thermal or light-induced degradation, in particular synthetic nanocomposite polymers or coatings, or for photoinitiating in-situ polymerization of pre-polymeric nano-composites or sols to nanocomposite materials.

Examples of such materials are:
1. Polymers of monoolefins and diolefins, for example polypropylene, polyisobutylene, polybut-l-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbomene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethyleneacrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
6c. Hydrogenated aromatic polymers derived from hydrogenation of polymers mentioned under 6a.). Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6,12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or polym-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polyketones.
21. Polysulfones, polyether sulfones and polyether ketones.
22. Crosslinked polymers derived from aldehydes on the one hand and phenols, ureas and melamines on the other hand, such as phenol/formaldehyde resins, urea/formaldehyde resins and melamine/formaldehyde resins.
23. Drying and non-drying alkyd resins.
24. Unsaturated polyester resins derived from copolyesters of saturated and unsaturated dicarboxylic acids with polyhydric alcohols and vinyl compounds as crosslinking agents, and also halogen-containing modifications thereof of low flammability.
25. Crosslinkable acrylic resins derived from substituted acrylates, for example epoxy acrylates, urethane acrylates or polyester acrylates.
26. Alkyd resins, polyester resins and acrylate resins crosslinked with melamine resins, urea resins, isocyanates, isocyanurates, polyisocyanates or epoxy resins.
27. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
28. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
29. Blends of the aforementioned polymers (polyblends), for example PP/EPDM, Polyamide/EPDM or ABS, PVC/EVA, PVC/ABS, PVC/MBS, PC/ABS. PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.
30. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.
31. Aqueous emulsions of natural or synthetic rubber, e.g. natural latex or latices of carboxylated styrene/butadiene copolymers.
32. Pre-polymeric monomers or oligomers of the aforementioned polymers or blends.
33. Sols, especially organosols, as stable liquid suspensions of -colloidal nano-particles in a diluent, a reactive (e.g. crosslinking) diluent or in a polymerizable or crosslinking monomer, or in a mixture of all.

Preferred organic materials are polymers, for example a pre-polymer for a nanocomposite material, in particular synthetic polymers, for example thermoplastic polymers. Polyamides and polyolefins are particularly preferred. Examples of preferred polyolefins are polypropylene or polyethylene.

Preferably, component (b) is added to the material to be stabilized, compatibilized, flame-retarded and/or polymerization regulated in an amount from 0.01 to 10%, in particular 0.01 to 2%, for example 0.1 to 2%, relative to the weight of the organic material to be stabilized, compatibilized, flame-retarded and/or polymerization regulated.

The compositions according to the invention can contain, in addition to components (a) and (b), additional additives, for example the ones listed below:

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.

1.2. Alkylthiomethylphenols, for example 2,4-dioctylthiomethyl-6-tert-butylphenol, 2,4-dioctyl-thiomethyl-6-methylphenol, 2,4-dioctylthiomethyl-6-ethylphenol, -2,6-di-dodecylthiomethyl-4-nonylphenol.

1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.

1.4. Tocopherols, for example α-tocopherol, β-tocopherol, γ-tocopherol, δ-tocopherol and mixtures thereof (vitamin E).

1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.

1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(a-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methy-lenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis-(5-tert-butyl-4-hydroxy2-methylphenyl)-4-n-dodecylmercaptobutane, 1,1,5, 5-tetra(5-tert-butyl-4-hydroxy-2-methylphenyl)pentane.

1.7. O-, N- and S-benzyl compounds, for example 3,5,3',5'-tetra-tert-butyl-4,4'-dihydroxydi-benzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate..

1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, di-dodecylmercaptoethyl-2,2-bis(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.

1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.

1.10. Triazine compounds, for example 2,4-bis(octylmercapto)-6-(3,5-di-tert-butyl-4.-hydroxy-anilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.

1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.

1.12. Acylaminophenols, for example 4-hydroxylauranilide, 4-hydroxystearanilide, octyl N-(3,5-di-tert-butyl-4-hydroxyphenyl)carbamate.

1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.

1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)ox-amide, 3-thiaundecanol, 3-thiapentadecanol, trimethylhexanediol, trimethylolpropane, 4-hydroxymethyl-1-phospha-2,6,7-trioxabicyclo[2.2.2]octane.

1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)ox-amide, 3-thiaundecanol, 3-thiapentadecanol, trimethylhexanediol, trimethylolpropane, 4-hydroxymethyl-1-phospha-2,6,7-trioxabicyclo[2.2.2]octane.

1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hy-drazide, N,N'-bis[2-(3-[3,5-di-tert-butyl-4-hydroxyphenyl]propionyloxy)ethyl]oxamide (Nau-gard^{®}XL-1, supplied by Uniroyal).

1.18. Ascorbic acid (vitamin C)

1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenyl-amine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butyl-aminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylamino-methylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenyl-amino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenyl-amines, a mixture of mono- and dialkylated nonyldiphenylamines, a mixture of mono- and dialkylated dodecyldiphenylamines, a mixture of mono- and dialkylated isopropyl/isohexyl-diphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octylphenothiazines, N-allylphenothiazine, N,N,N',N'-tetraphenyl-1,4-diaminobut-2-ene.

### 2. UV absorbers and light stabilizers

2.1. 2-(2'-Hydroxyphenyl)benzotriazoles, for example 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyl-oxy)carbonylethyl]-2'-hydroxyphenyl)-5-chlorobenzotriazole, 2-(3'-tert-butyl-2'-hydroxy-5-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonyl-ethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 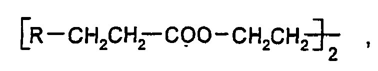 where R = 3'-tert-butyl-4'-hydroxy-5'-2H-benzotri-azol-2-ylphenyl, 2-[2'-hydroxy-3'-(α,α-dimethylbenzyl)-5'-(1,1,3,3-tetramethylbutyl)phenyl]-benzotriazole; 2-[2'-hydroxy-3'-(1,1,3,3-tetramethylbutyl)-5'-(α,α-dimethylbenzyl)phenyl]benzotriazole.

2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

2.3. Esters of substituted and unsubstituted benzoic acids, for example 4-tert-butylphenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

2.4. Acrylates, for example ethyl α-cyano-β,β-diphenylacrylate, isooctyl α-cyano-β,β-diphe-nylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-β-cyanovinyl)-2-methylindoline.

2.5. Nickel compounds, for example nickel complexes of 2,2'-thiobis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphe-nylundecylketoxime, nickel complexes of 1-phenyl-4-lauroyl-5-hydroxypyrazole, with or without additional ligands.

2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-di-chloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-tri-chloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-di-aza-4-oxo-spiro[4,5]decane, a reaction product of 7,7,9,9-tetramethyl-2-cycloundecyl-1-oxa-. 3,8-diaza-4-oxospiro-[4,5]decane and epichlorohydrin, 1,1-bis(1,2,2,6,6-pentamethyl-4.-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine.

2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.

2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyl-oxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hy-droxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine.

3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyl-oyl)oxalyl dihydrazide, N,N'-bis(salicyloyl)thiopropionyl dihydrazide.

4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-di-cumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-te-tra-tert-butyl-1,1'-biphenyl-2,2'-diyl)phosphite, 5-butyl-5-ethyl-2-(2,4,6-tri-tert-butylphenoxy)-1,3,2-dioxaphosphirane.

5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.

6. Nitrones, for example N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecylnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.

7. Thiosynergists, for example dilauryl thiodipropionate or distearyl-thiodipropionate.

8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

9. Polyamide stabilisers, for example copper salts in combination with iodides and/or phosphorus compounds and salts of divalent manganese.

10. Basic co-stabilisers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.

11. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzy!idene)sorbitol, 1,3:2,4-di(paramethyl-dibenzylidene)sorbitol, and 1,3:2,4-di(benzylidene)sorbitol.

12. Fillers and reinforcing agents, for example calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.

13. Other additives, for example plasticisers, lubricants, emulsifiers, pigments, rheology additives, catalysts, flow-control agents, optical brighteners, flameproofing agents, antistatic agents and blowing agents.

14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 or EP-A-0591102 or 3-[4-(2-acetoxyethoxy)-phenyl]-5,7-di-tert-butylbenzofuran-2-one, 5,7-di-tert-butyl-3-[4-(2-stearoyloxyethoxy)phenyl]-benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzo-furan-2-one, 3-(3,4-dimethylphenyl)-5,7-di-tert-butylbenzofuran-2-one, 3-(2,3-dimethylphenyl)-5,7-di-tert-butylbenzofuran-2-one.

The costabilizers are added, for example, in concentrations of 0.01 to 10%, relative to the total weight of the material to be stabilized and/or compatibilized.

Incorporation of component (b) and, if desired, further additives into the polymeric, organic material is carried out by known methods, for example before or during moulding or else by applying the dissolved or dispersed compounds to the polymeric, organic material, if appropriate with subsequent slow evaporation of the solvent. Component (b) can also be added to the materials to be stabilized in the form of a masterbatch or a colloidal sol or organosol containing for example 5 to 50 % by weight of component (b).

Component (b) can also be added before or during polymerisation or before crosslinking.

Component (b) can be incorporated into the material to be stabilized and/or compatibilized in pure form or encapsulated in waxes, oils or polymers.

Component (b) can also be sprayed onto the material to be stabilized, compatibilized, flame-retarded and/or polymerized.

The materials thus treated as mentioned above can be used in various forms, for example as films, fibres, ribbons, moulded materials, profiles, coatings or as binders for paints, adhesives or cement.

The invention also relates to novel products obtainable by reacting a nano-scaled filler with a compound of the formula I

AD-L-RG (I)

wherein
AD is an additive selected from the group of radical scavengers, hydroperoxide decomposers, UV-absorbers, light stabilizers, flame retardants or photoinitiators,
L is a direct bond, 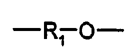 or 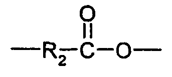 with the proviso that the oxygen atom is attached to AD; C₁-C₂₅alkylene, C₂-C₂₅alkylene interrupted by -O-, -S-, -SO-, -SO₂-, 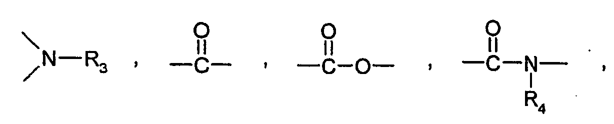 phenylene or C₅-C₈cycloalkylene; or a block-graft copolymer,
RG is 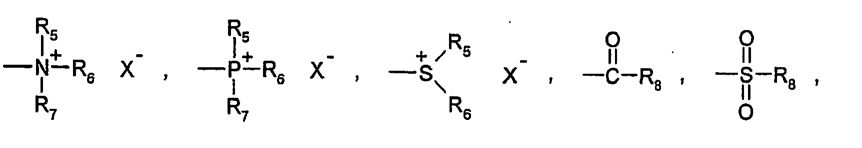 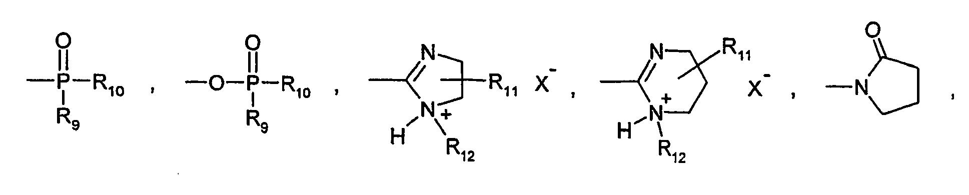 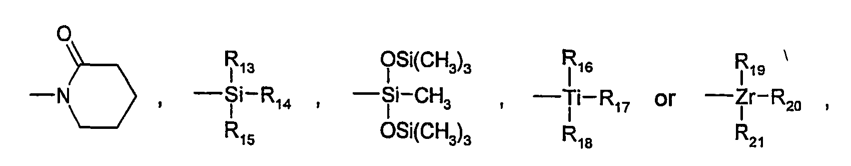 wherein
   R₁ is C₁-C₁₈alkylene,
   R₂ is a direct bond or C₁-C₁₈alkylene,
   R₃ is hydrogen or C₁-C₈alkyl,
   R₄ is hydrogen or C₁-C₄alkyl,
   R₅, R₆ and R₇ are each independently of the others hydrogen, C₁-C₂₅alkyl, phenyl or C₇-C₂₅phenylalkyl,
   R₈, R₉ and R₁₀ are each independently of the others hydroxyl, 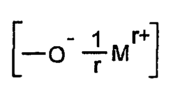 or 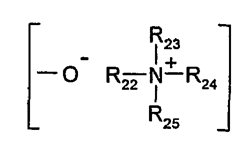
   R₁₁ is hydrogen or C₁-C₂₅alkyl,
   R₁₂ is hydrogen or C₁-C₂₅alkyl, C₃-C₂₅alkyl interrupted by oxygen, sulfur or by 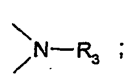 or C₂-C₂₄alkenyl,
   R₁₃, R₁₄ and R₁₅ are each independently of the others halogen, amino, C₁-C₂₅alkoxy or C₁-C₂₅alkyl, with the proviso that at least one radical of R₁₃, R₁₄ and R₁₅ is different from C₁-C₂₅alkyl,
   R₁₆, R₁₇ and R₁₈ are each independently of the others C₁-C₁₂alkoxy or C₂-C₂₅alkanoyloxy,
   R₁₉, R₂₀ and R₂₁ are each independently of the others C₁-C₁₂alkoxy, C₂-C₂₅alkanoyloxy or benzoyloxy,
   R₂₂, R₂₃, R₂₄ and R₂₅ are each independently of the others hydrogen, C₁-C₂₅alkyl or hydroxyl-substituted C₂-C₂₄alkyl,
   M is a r-valent metal cation,
   X⁻ is fluoride, chloride, bromide, iodide, nitrite, nitrate, hydroxide, acetate, hydrogen sulfate, sulfate, methyl sulfate or mixtures thereof, and
   r is 1, 2 or 3.

Of special interest of novel products obtainable by reacting a nano-scaled filler with a compound of the formula I are those, wherein
AD is an additive selected from the group of radical scavengers, hydroperoxide decomposers, UV-absorbers, light stabilizers, flame retardants or photoinitiators,
L is a direct bond, 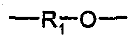 with the proviso that the oxygen atom is attached to AD, 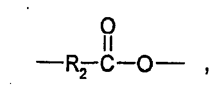 C₁-C₂₅alkylene, C₂-C₂₅alkylene interrupted by -O-, -S-, -SO-, -SO₂-, 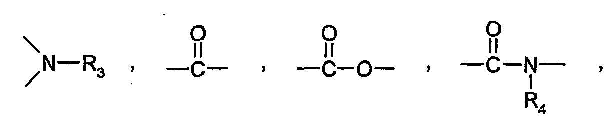 phenylene, C₅-C₈cycloalkylene; or a maleic anhydride-grafted polypropylene,
RG is 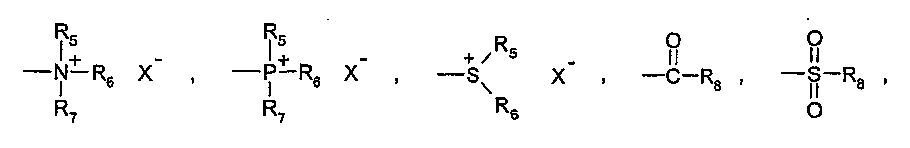 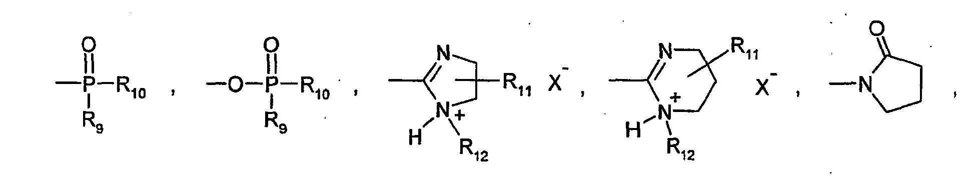 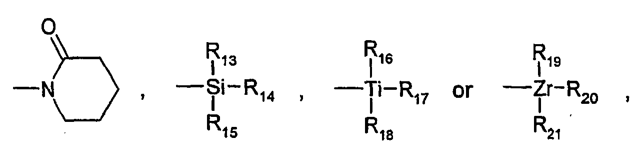 wherein
R₁ is C₁C₁₈alkylene,
R₂ is a direct bond or C₁-C₁₈alkylene,
R₃ is hydrogen or C₁-C₈alkyl,
R₄ is hydrogen or C₁-C₄alkyl,
R₅, R₆ and R₇ are each independently of the others hydrogen, C₁-C₂₅alkyl, phenyl or C₇-C₂₅phenylalkyl,
R₈, R₉ and R₁₀ are each independently of the others hydroxyl, 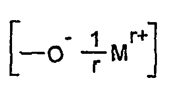 or 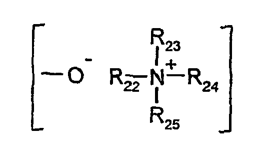
R₁₁ is hydrogen or C₁-C₂₅alkyl,
R₁₂ is hydrogen or C₁-C₂₅alkyl, C₃-C₂₅alkyl interrupted by oxygen, sulfur or by 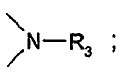 or C₂-C₂₄alkenyl,
R₁₃, R₁₄ and R₁₅ are each independently of the others halogen, amino, C₁-C₂₅alkoxy or C₁-C₂₅alkyl, with the proviso that at least one radical of R₁₃, R₁₄ and R₁₅ is different from C₁-C₂₅alkyl,
R₁₆, R₁₇ and R₁₈ are each independently of the others C₁-C₁₂alkoxy or C₂-C₂₅alkanoyloxy,
R₁₉, R₂₀ and R₂₁ are each independently of the others C₁-C₁₂alkoxy, C₂-C₂₅alkanoyloxy or benzoyloxy,
R₂₂, R₂₃, R₂₄ and R₂₅ are each independently of the others hydrogen, C₁-C₂₅alkyl or hydroxyl-substituted C₂-C₂₄alkyl,
M is a r-valent metal cation,
X⁻ is fluoride, chloride, bromide, iodide, nitrite, nitrate, hydroxide, acetate, hydrogen sulfate, sulfate, methyl sulfate or mixtures thereof, and
r is 1, 2 or 3.

Preferred groups of the novel products conform to the preferences given above for the compositions according to the invention.

The present invention further provides a process for stabilizing, flame-retarding and/or compatibilizing an organic material which is subject to oxidative, thermal or light-induced degradation, which comprises incorporating therein, or applying thereto, at least one product obtainable by reacting a nano-scaled filler with a compound of the formula I.

The present invention also provides a process for photoinitiating in-situ polymerization or hardening of a pre-polymeric nanocomposite or sol to a nanocomposite material, which comprises incorporating therein, or applying thereto, at least one product obtainable by reacting a nano-scaled filler with a compound of the formula I.

A further embodiment of the present invention is the use of a product obtainable by reacting a nano-scaled filler with a compound of the formula I as stabilizer and/or flame-retarder and/or compatibilizer for organic materials which are subject to oxidative, thermal or light-induced degradation.

The present invention also provides the use of a product obtainable by reacting a nano-scaled filler with a compound of the formula I as photoinitiator for the in-situ polymerization or hardening of pre-polymeric nanocomposites or sols to nanocomposite materials.

The preferred products and organic materials for the process and use are the same as those for the compositions according to the invention.

The following Examples illustrate the invention in more detail. Parts or percentages are by weight.

### Example 1: Product obtained by reacting a nano-scaled organophilic montmorillonite with a compound of the formula (101).

a) Preparation of the compound of the formula (101). 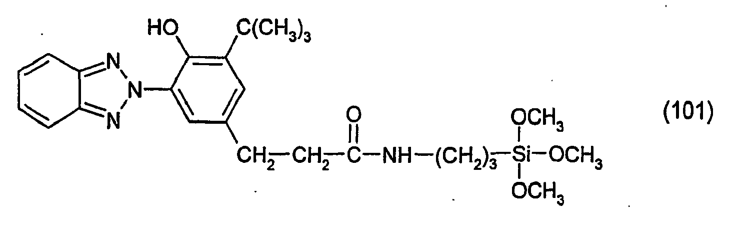 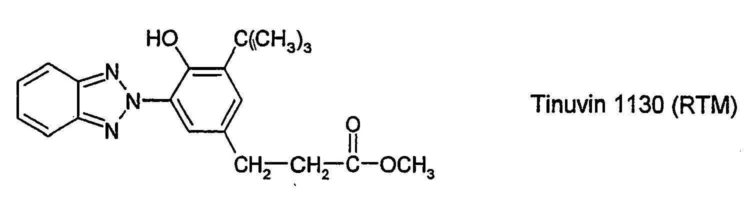 35.3 g (0.10 mole) of Tinuvin 1130 (RTM, Ciba Specialty Chemicals Inc.), 21.5 g (0.12 mole) of 3-aminopropyl-trimethoxysilane and 0.50 g (2.0 mmole) of dibutyltinoxide are mixed and heated to 130°C. The formed methanol is distilled off during 5 hours. The excess 3-aminopropyl-trimethoxysilane is distilled off under reduced pressure using a vacuum rotary evaporator. The residue yields 50 g of the compound of the formula (101) as a clear yellow, viscous oil. ¹H-NMR (300 MHz, CDCl₃, ppm): 1.49 (s, 9H, tert-butyl); 3.53 (s, 9H, Si(OCH₃)₃).
b) Product obtained by reacting a nano-scaled organophilic montmorillonite with a compound of the formula (101).
   120 g of a nano-scaled organophilic montmorillonite [Nanomer^{®} I.42E] is suspended in 2.4 I of ethanol (95 %) and heated under vigorous stirring to 75°C. Then, a solution of 4.2 g of the compound of the formula (101), prepared according to Example 1a, in 50 ml of ethanol is added dropwise during 10 minutes. Then the pH was adjusted with acetic acid (35 ml) to a pH of 5.3. The reaction mixture is refluxed for 24 hours. The reaction mixture is cooled to room temperature and the product isolated by filtration. The residue is washed with water and ethanol and afterwards dried under vacuum to a constant weight. The slightly yellowish powder (106 g) is homogenized in a mortar. It contains 3.2 % by weight of (2'-hydroxyphenyl)benzotriazol type UV absorber.

### Example 2: Product obtained by reacting a nano-scaled organophilic montmorillonite with a compound of the formula (107).

a) Preparation of the compound of the formula (107). 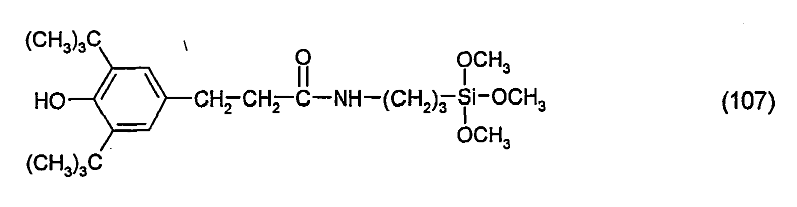 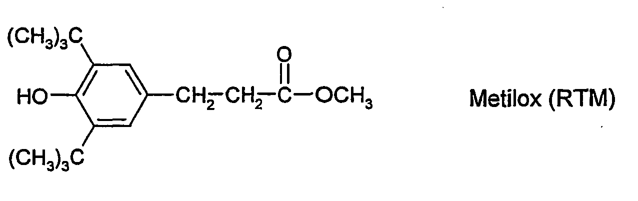 29.3 g (0.10 mole) of Metilox (RTM, Ciba Specialty Chemicals Inc.), 21.5 g (0.12 mole) of 3-aminopropyl-trimethoxysilane and 0.5 g (2.0 mmole) of dibutyltinoxide are mixed and heated to 130°C. The formed methanol is distilled off during 2 hours. The excess 3-aminopropyl-trimethoxysilane is distilled off under reduced pressure using a vacuum rotary evaporator. The residue yields 43 g of the compound of the formula (107) as a slightly yellowish, viscous oil. ¹H-NMR (400 MHz, CDCl₃, ppm): 1.43 (s, 18H, tert-butyl); 3.54 (s, 9H, Si(OCH₃)₃).
b) Product obtained by reacting a nano-scaled organophilic montmorillonite with a compound of the formula (107).
   120 g of a nano-scaled organophilic montmorillonite [Nanomer I.42E (RTM)] is suspended in 2.4 I of ethanol (95 %) and heated under vigorous stirring to 75°C. Then, a solution of 4.2 g of the compound of the formula (107), prepared according to Example 2a, in 50 ml of ethanol is added dropwise during 10 minutes. The pH is adjusted to 5.3 with acetic acid (33 ml). The suspension is then heated at reflux for 24 hours. Then the reaction mixture is cooled to room temperature, and after standing for 20 minutes the ethanol is decanted. After washing the precipitated product with ethanol and water it is isolated by filtration and dried in an oven at 80°C till constant weight. The slightly yellowish powder (106 g) is homogenized in a mortar and contains 3.1 % by weight of phenolic antioxidant.

### Example 3: Product obtained by reacting a nano-scaled organophilic montmorillonite with a compound of the formula (102).

a) Preparation of the compound of the formula (102). 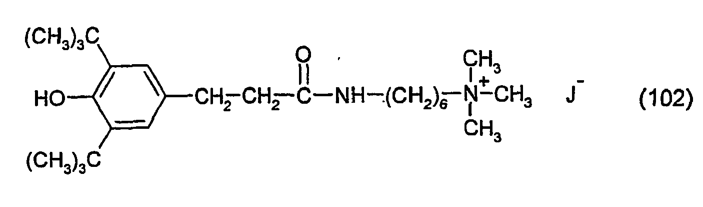 116.2 (1.0 mole) of 1,6-diaminohexane are dissolved in 200 ml of toluene. Then a solution of 58.4 g (0.20 mole) of Metilox (RTM, Ciba Specialty Chemicals Inc.) in 100 ml of toluene is added within 5 hours while toluene and generated methanol are continuously distilled off at an inner temperature of approximately 160°C. The reaction mixture is heated for another 14 hours at a bath temperature of 170°C, with methanol and a part of 1,6-diaminohexane distilling. Then the remaining excess of 1,6-diaminohexane is distilled off under reduced pressure. The residue is dissolved in 200 ml of toluene and washed with water. The organic phase is concentrated at reduced pressure using a vacuum rotary evaporator. 61 g of a clear, viscous oil is chromatographically purified on silicagel to yield 33 g of a white solid (yield 44 %) of formula (202) with mp 102 - 104°C (beside 5.1 g of the bisphenolic product as a white solid with mp 157 - 158°C). Analysis, calculated: C 73.36; H 10.71; N 7.44 %. Analysis, found: C 73.12; H 10.53; N 7.34 %. 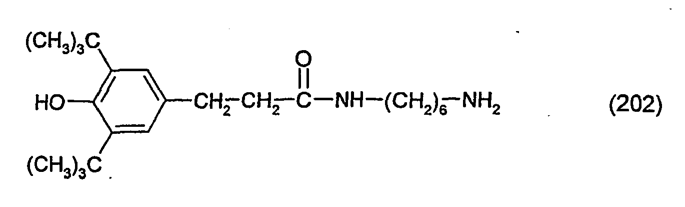 3.8 g (0.010 mole) of the compound of the formula (202) is added to a solution of 7.1 g (0.020 mole) of sodium carbonate in 14 ml of water. After the addition of 10 g (0.070 mole) of methyl iodide the reaction mixture is refluxed at 45°C for 6 hours. The reaction mixture is cooled and the excess methyl iodide distilled off under reduced pressure using a vacuum rotary evaporator. The residue is dissolved with dichloromethane. The organic phase is washed with water, filtered and concentrated using a vacuum rotary evaporator. The residue is suspended in 50 ml of hexane. The product is collected by filtration and dried under reduced pressure at 70°C to yield 4.7 g (85 %) of the compound of the formula (102), m.p. 123 - 130°C.
b) Product obtained by reacting a nano-scaled organophilic montmorillonite with a compound of the formula (102).

To vigorously stirred solution of 3.5 g (0.0064 mole) of the compound of the formula (102) in 1200 ml of ethanol (95 %) is added 120 g of a nano-scaled organophilic montmorillonite [Nanomer I.42E (RTM)]. The suspension is then heated at reflux for 2 hours. The reaction mixture is cooled to room temperature and the product is isolated by filtration. The residue is washed twice with 200 ml of ethanol, twice with 200 ml of water and then dried in an oven at 90°C for 24 hours. The off-white powder (111.5 g) is homogenized in a mortar and contains 2.3 % by weight of phenolic antioxidant.

### Example 4: Stabilization of polyamide.

2 kg of unstabilized polyamide 6.6 granules [Zytel 101 L (RTM) of Du Pont] is dried under vacuum at 80°C over night. The nano-scaled fillers are dried at 80°C for 4 hours. 102 g (5% by weight) of the nano-scaled fillers are then dry blended with the polyamide 6.6 and compounded in a twin-screw extruder (type Berstorff) at a maximum of 300°C and then pelletized. The granules obtained are injection moulded in an injection moulding apparatus at a maximum of 240°C to 2 mm thick plaques. These plaques are aged in a circulating air oven at 150°C. The yellowness index (YI) of these plaques is determined in accordance with ASTM D 1925-70 as a function of oven ageing time. Low YI values denote little discoloration, high YI values strong discoloration of the plaques. The less discoloration, the more effective the additive functionalized nano-scaled filler. The results are compiled in Table 1.

**Table 1:**

| Example | Nano-scaled filler | Yellowness Index after oven ageing at 150°C (28 days) |
|---|---|---|
| 4a^{a)} | 100.0 g Nanomer I.42E (RTM)^{c)} | 18.8 |
| | 2.0 g compound A^{d)} | |
| 4b^{b)} | 40.0 g Nanomer I.42E (RTM)^{c)} | 15.6 |
| | 62.0 g Product of Example 2b | |
| 4c^{b)} | 3.0 g Nanomer I.42E (RTM)^{c)} | 14.6 |
| | 100.0 g Product of Example 3b | |

| | | |
|---|---|---|
| a) Comparison Example. b) Example of this invention. c) Nanomer I.42E (RTM) is a nano-scaled organophilic montmorillonite. d) Compound A is an antioxidant which does not possess a RG (reactive group) and therefore does not react with the nano-scaled filler. | | |

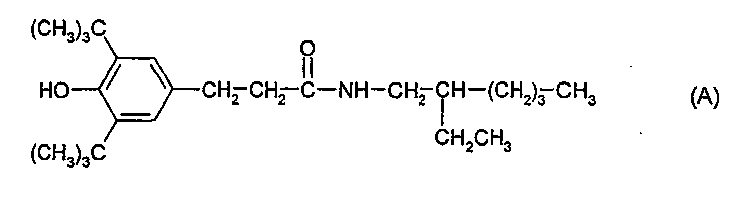

It has to be noted that the amount of antioxidant in Examples 4a, 4b and 4c is identical. In the comparison Example 4a, 2 g of the compound of formula A which does not possess a reactive group was added to 100 g of the pure nano-scaled filler [Nanomer 1.42E (RTM)]. In Examples 4b and 4c the used amount of the product of Examples 2b and 3b is such that that the antioxidant content corresponds to the amount of antioxidant used in the comparative Example 3a.

Examples A - D disclose the preparation of further compounds of the formula I which are useful as starting materials for the preparation of component (b) of the instant invention.

### Example A: Preparation of the compound of the formula (105).

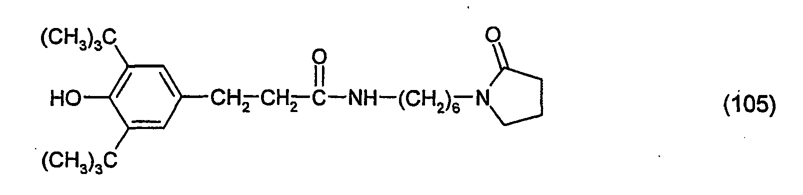

a) Preparation of the compound of the formula (203). 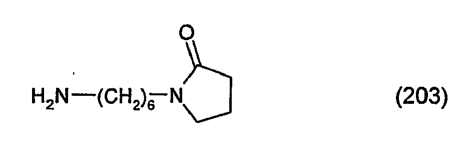 25.8 g (0.3 mol) y-butyrolactone and 105 g (0.9 mol) of 1,6-diaminohexane are diluted with 45 g of tetrahydronaphthalene. The suspension is heated to 200°C. Then the clear and colorless solution is stirred at 185 to 200°C for another 24 hours at reflux. Then tetrahydronaphthalene and excess of 1,6-diaminohexane is distilled off under reduced pressure. 17 g (31 %) of a clear colorless oil is distilled at 190°C under reduced pressure (ca. 0.05 mbar) to give the compound of the formula (203).
b) A mixture of 14.6 g (0.05 mol) of Metilox (RTM, Ciba Specialty Chemicals Inc.), 11.0 g (0.06 mol) of the compound of the formula (203) [prepared according to Example Aa] and 0.25 g dibutyl tin oxide is heated to 130°C and methanol is distilled off continuously. Within 5 hours all the Metilox has reacted. The raw product is a transparent, yellow melt. It is chromatographically purified on silicagel to yield 14 g (63 %) of the compound of the formula (105) as clear, colorless, highly viscous liquid. Analysis, calculated: C 72.93; H 9.97; N 6.30%. Analysis, found: C 72.70%; H 9.95; N 6.12%.

### Example B: Preparation of the compound of the formula (104).

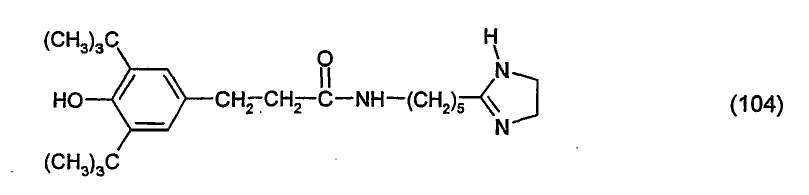

a) Preparation of the compound of the formula (204). 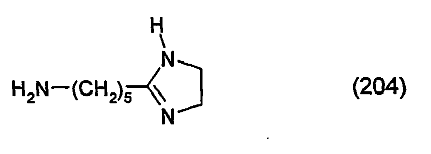 To a suspension of 33.9 g (0.3 mol) of 6-caprolactame and 20.0 g (0.33 mol) of ethylene diamine is added ca. 30 g of gaseous HCl within 1.5 hours. Without heating, the temperature raises from room temperature to 160°C. After heating to 200°C for 15 minutes addition of HCl is stopped. Then, at 230°C and slightly reduced pressure (ca. 200 mbar) 2.4 g of water is separated (50 %). Cooling the raw product to 100°C leaves a glassy mass. Addition of 30 ml of hot water leads to a clear solution. After cooling to 10°C 80 g of NaOH (45 % solution) is added within 10 minutes. The clear solution with some precipitate is concentrated to dryness. The resulting yellow oil with some white solid particles is re-dissolved/suspended and stirred in 200 ml ethanol, then filtered and reconcentrated to give a highly viscous oil. Distillation of the raw-product (ca. 120°C/0.03 mmbar) yields 15.7 g 34 % of the compound of the formula (204), white solid, mp 78 - 80°C. Analysis, calculated: C 61.90; H 11.04; N 27.07%. Analysis, found: C 61.77; H 10.87; N 26.74%.
b) A mixture of 14.6 g (50 mmol) Metilox (RTM, Ciba Specialty Chemicals Inc.), 7.8 g (50 mmol) of the product from example Ba and 0.25 g dibutyl tinoxide is heated to 140°C and methanol is distilled off continuously. Within 4 hours all the Metilox has reacted. The raw-product is a very viscous yellow oil. Purification by column chromatography on silicagel yields as the main product 13.4 g (65 %) of the compound of the formula (104) as highly viscous yellowish oil. Analysis, calculated: C 72.07; H 10.16; N 10.09%. Analysis, found: C 70.36; H 9.90; N 9.59% (some methanol present according to ¹H-NMR spectra).

### Example C: Preparation of the compound of the formula (103).

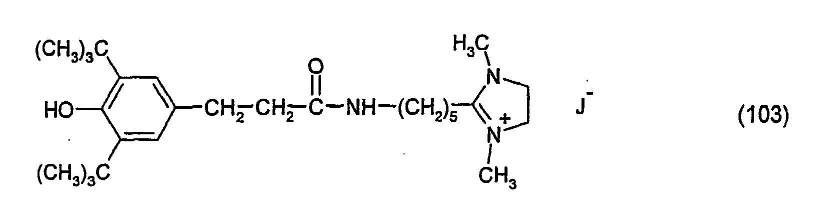

To a solution of 1.6 g sodium carbonate (15 mmol) in 10 ml water is added 10.6 g (75 mmol) methyl iodide and 6.2 g (15 mmol) of the compound of the formula (104) [prepared according to Example Bb]. The reaction mixture is heated to reflux temperature (45°C) for 6 hours. Then the excess of methyl iodide is distilled off. The residue is dissolved in 50 ml dichloromethane. This solution is washed with some water, filtered and concentrated under reduced pressure. The highly viscous yellow oil crystallizes from 100 ml hexane over night and yields 7.4 g (86 %) of the compound of the formula (103) as a yellowish solid. Analysis, calculated: C 56.64; H 8.27; N 7.34; I 22.16%. Analysis, found: C 56.36; H 8.12; N 6.95; I 21.35 %.

### Example D: Preparation of the compound of the formula (106).

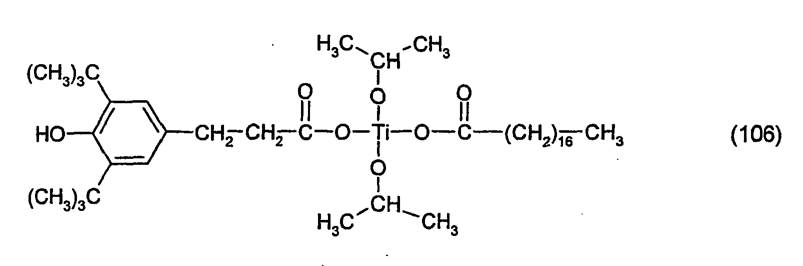

To a solution of 2.9 g (10 mmol) tetraisopropyl orthotitanate in 5 ml toluene is added 2.8 g (10 mmol) of 'Metilox acid' (the corresponding carboxylic acid of Metilox). The suspension is heated to 40°C for 30 minutes. Then 2.9 g of stearic acid is added and the clear solution is heated to 60°C for another hour. The reaction mixture is concentrated in vacuo and dried at 80°C/0.05 mbar to yield 7.0 g (96 %) of the compound of formula (106) as a clear orange viscous oil. Analysis, calculated: C 67.56; H 10.51; Ti 6.57%. Analysis, found: C 67.45; H 9.96; Ti 7.41%.

## Claims

1. A composition comprising
a) an organic material subject to oxidative, thermal or light-induced degradation, and
b) at least one product obtainable by reacting a nano-scaled filler having a particle size of less than 200 nm with a compound of the formula I
AD-L-RG (I)
wherein
AD is an additive selected from the group of radical scavengers, hydroperoxide decomposers, UV-absorbers, light stabilizers, flame retardants or photoinitiators,
L is a direct bond, 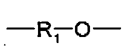 or 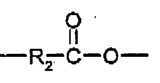 with the proviso that the oxygen atom is attached to AD; C₁-C₂₅alkylene, C₂-C₂₅alkylene interrupted by -O-, -S-, -SO-, - SO₂-, 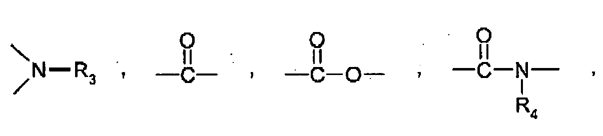 phenylene or C₅-C₈cycloalkylene; or a block-graft copolymer,
RG is 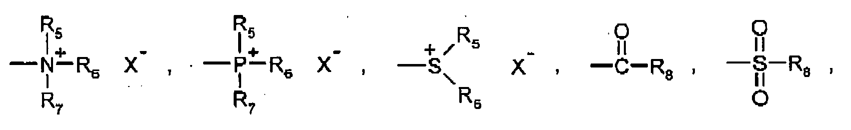 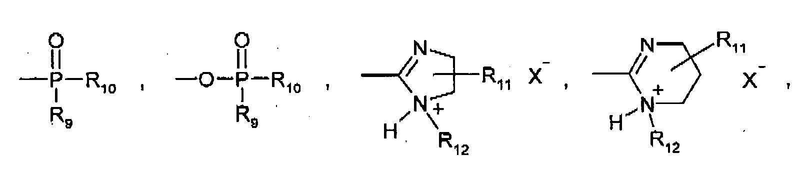 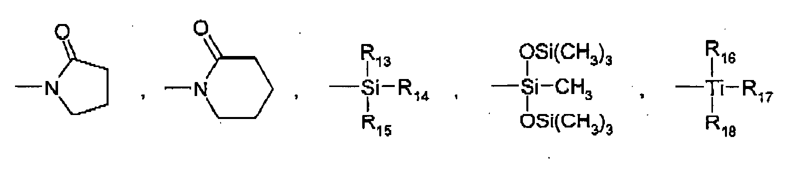 or 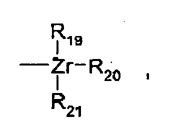 wherein
R₁ is C₁-C₁₈alkylene,
R₂ is a direct bond or C₁-C₁₈alkylene,
R₃ is hydrogen or C₁-C₈alkyl,
R₄ is hydrogen or C₁-C₄alkyl,
R₅, R₆ and R₇ are each independently of the others hydrogen, C₁-C₂₅alkyl, phenyl or C₇-C₂₅phenylalkyl,
R₈, R₉ and R₁₀ are each independently of the others hydroxyl, 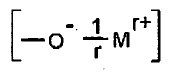 or 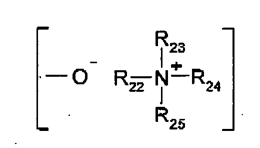
R₁₁ is hydrogen or C₁-C₂₅alkyl,
R₁₂ is hydrogen or C₁-C₂₅alkyl, C₃-C₂₅alkyl interrupted by oxygen, sulfur or by 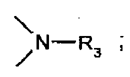 or C₂-C₂₄alkenyl,
R₁₃, R₁₄ and R₁₅ are each independently of the others halogen, amino, C₁-C₂₅alkoxy or C₁-C₂₅alkyl, with the proviso that at least one radical of R₁₃, R₁₄ and R₁₅ is different from C₁-C₂₅alkyl,
R₁₆, R₁₇ and R₁₈ are each independently of the others C₁-C₁₂alkoxy or C₂-C₂₅alkanoyloxy,
R₁₉, R₂₀ and R₂₁ are each independently of the others C₁-C₁₂alkoxy, C₂-C₂₅alkanoyloxy or benzoyloxy,
R₂₂, R₂₃, R₂₄ and R₂₅ are each independently of the others hydrogen, C₁-C₂₅alkyl or hydroxyl-substituted C₂-C₂₄alkyl,
M is a r-valent metal cation,
X- is fluoride, chloride, bromide, iodide, nitrite, nitrate, hydroxide, acetate, hydrogen sulfate, sulfate, methyl sulfate or mixtures thereof, and
r is 1, 2 or 3
wherein the reaction is carried out in a suspension or solution in a solvent, in a pH range of from 11 to 3 and at a temperature of from 20 to 150 °C.

2. A composition according to claim 1, wherein
AD is an additive selected from the group of radical scavengers, hydroperoxide decomposers, UV-absorbers, light stabilizers, flame retardants or photoinitiators,
L is a direct bond, 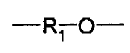 with the proviso that the oxygen atom is attached to AD, 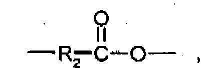 C₁-C₂₅alkylene, C₂-C₂₅alkylene interrupted by -O-, -S-, -SO-, -SO₂-, 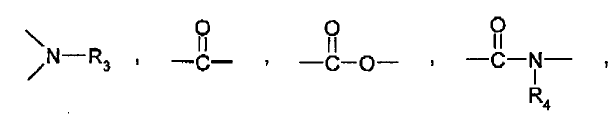 phenylene or C₅-C₈cycloalkylene; or a maleic anhydride-grafted polypropylene,
RG is 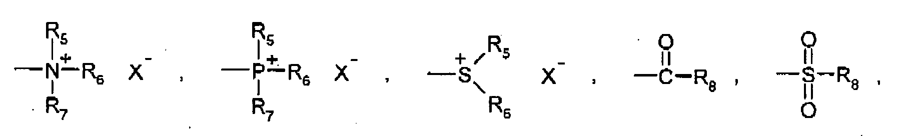 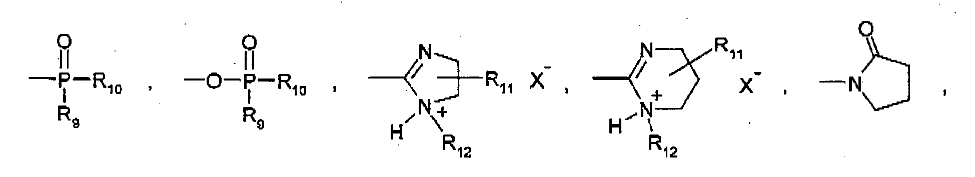 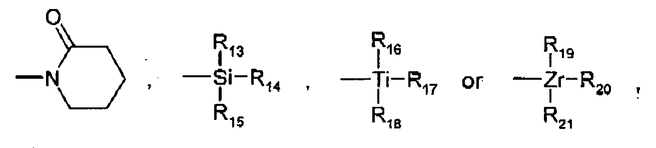 wherein
R₁ is C₁-C₁₈alkylene,
R₂ is a direct bond or C₁-C₁₀alkylene.
R₃ is hydrogen or C₁-C₈alkyl,
R₄ is hydrogen or C₁-C₄alkyl,
R₅, R₆ and R₇ are each independently of the others hydrogen, C₁-C₂₅alkyl, phenyl or C₇-C₂₅phenylalkyl,
R₈, R₉ and R₁₀ are each independently of the others hydroxyl, 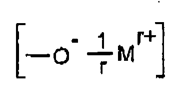 or 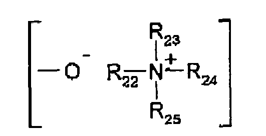
R₁₁ is hydrogen or C₁-C₂₅alkyl,
R₁₂ is hydrogen or C₁-C₂₅alkyl, C₃-C₂₅alkyl interrupted by oxygen, sulfur or by 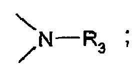 or C₂-C₂₄alkenyl,
R₁₃, R₁₄ and R₁₅ are each independently of the others halogen, amino, C₁-C₂₅alkoxy or C₁-C₂₅alkyl, with the proviso that at least one radical of R₁₃, R₁₄ and R₁₅ is different from C₁-C₂₅alkyl,
R₁₆, R₁₇ and R₁₈ are each independently of the others C₁-C₁₂alkoxy or C₂-C₂₅alkanoyloxy,
R₁₉, R₂₀ and R₂₁ are each independently of the others C₁-C₁₂alkoxy, C₂-C₂₅alkanoyloxy or benzoyloxy,
R₂₂, R₂₃, R₂₄ and R₂₅ are each independently of the others hydrogen, C₁-C₂₅alkyl or hydroxyl-substituted C₂-C₂₄alkyl,
M is a r-valent metal cation,
X⁻ is fluoride, chloride, bromide, iodide, nitrite, nitrate, hydroxide, acetate, hydrogen sulfate, sulfate, methyl sulfate or mixtures thereof, and
r is 1, 2 or 3.

3. A composition according to claim 1, wherein component (a) is a pre-polymer for a nano-composite material.

4. A composition according to claim 1, wherein component (a) is a synthetic polymer.

5. A composition according to claim 1, wherein component (a) is a polyamide or a polyolefin.

6. A composition according to claim 1, wherein the filler is an organophilically modified natural or synthetic phyllosilicate or a mixture of such phyllosilicates.

7. A composition according to claim 1, wherein the filler is an organophilically modified montmorillonite, bentonite, beidellite, hectorite, saponite, nontronites, sauconite, vermiculite, ledikite, magadiite, kenyaite or stevensite.

8. A composition according to claim 1, wherein AD is an additive selected from the group of phenolic antioxidants, benzofuran-2-ones, sterically hindered amines, aminic antioxidants, 2-(2'-hydroxyphenyl)benzotriazoles, 2-hydroxybenzophenones, 2-(2-hydroxyphenyl)-1,3,5-triazines, phosphites, phosphonites, thioethers, benzophenones, α-activated acetophenones, bisacylphosphinoxides (BAPO), monoacylphosphinoxides (MAPO), alkoxamines, thioxanthones, benzoins, benzil ketals, benzoin ethers, α-hydroxy-alkylphenones or α-aminoalkylphenones.

9. A composition according to claim 1, wherein AD is 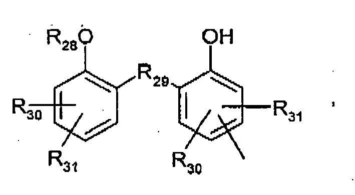 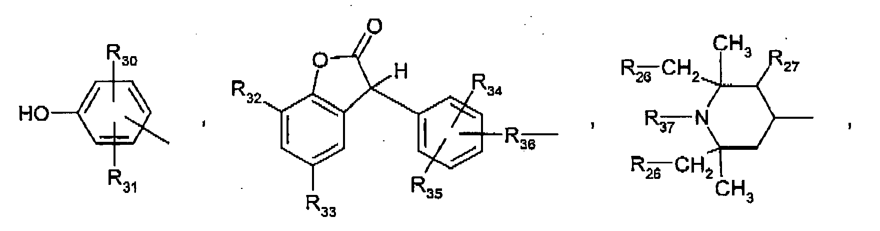 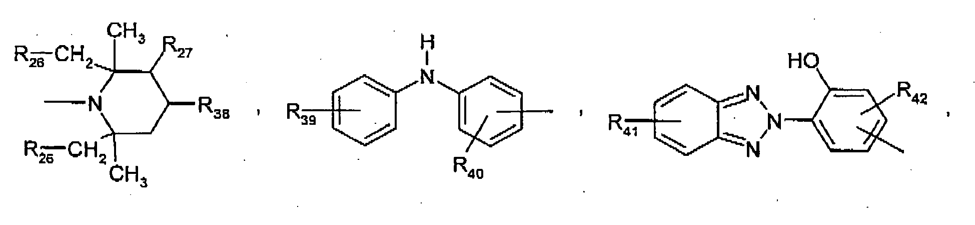 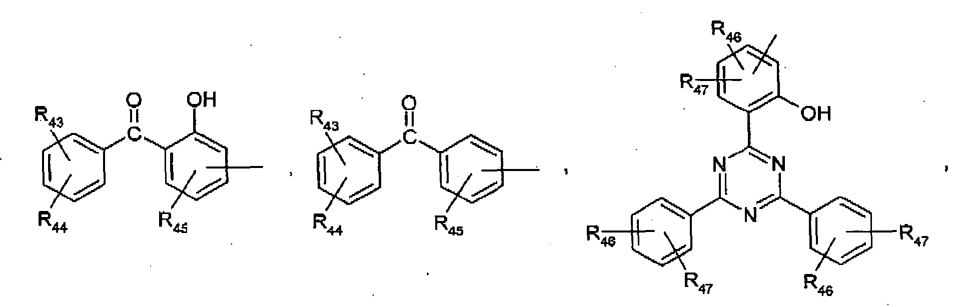 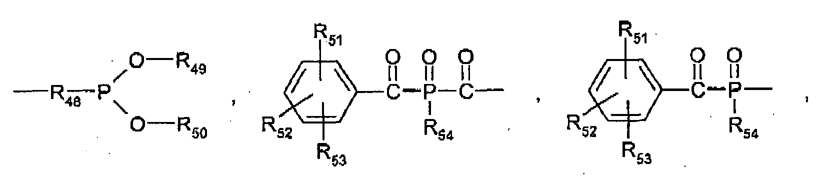 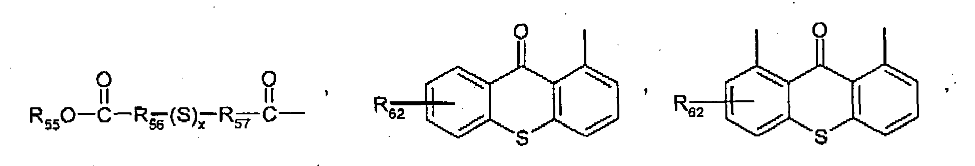 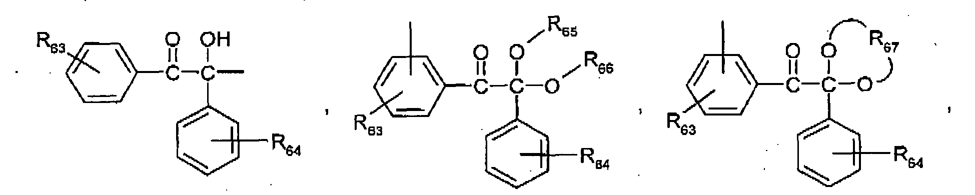 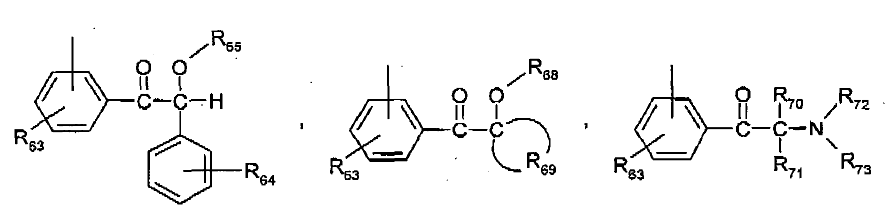 or 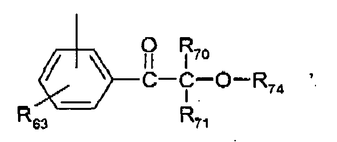 wherein
R₂₆ is hydrogen or methyl,
R₂₇ is hydrogen or methyl,
R₂₈ is hydrogen or 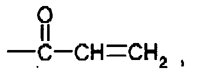
R₂₉ is C₁-C₄alkylene,
R₃₀ and R₃₁ are each independently of the other hydrogen, C₁-C₁₈alkyl, C₇-C₉phenylalkyl, phenyl or C₅-C₈cycloalkyl,
R₃₂ and R₃₃ are each independently of the other hydrogen, C₁-C₁₈alkyl, C₇-C₉phenylalkyl, phenyl or C₅-C₈cycloalkyl,
R₃₄ and R₃₅ are each independently of the other hydrogen, halogen, C₁-C₄alkyl, -CN, trifluoromethyl or C₁-C₄alkoxy,
R₃₆ is a direct bond or -O-,
R₃₇ is hydrogen, -O⁻, C₁-C₂₅alkyl, C₂-C₂₀alkenyl, C₂-C₂₀alkinyl, C₁-C₂₀alkoxy, C₅-C₁₂cycloalk-oxy, C₇-C₂₅aralkoxy, C₆-C₁₂aryloxy, C₇-C₉phenylalkyl, C₅-C₁₂cycloalkyl, phenyl, naphthyl, hydroxyethyl, C₂C₂₅alkanoyl, benzoyl, naphthoyl or C₂-C₂₀alkoxyalkanoyl,
R₃₈ is hydrogen or an organic radical,
R₃₉ and R₄₀ are each independently of the other hydrogen, C₁-C₁₈alkyl, C₇-C₉phenylalkyl or phenyl,
R₄₁ is hydrogen, halogen or C₁-C₁₈alkyl,
R₄₂ is hydrogen, C₁-C₁₈alkyl or C₇-C₉phenylalkyl,
R₄₃ and R₄₄ are each independently of the other hydrogen, C₁-C₁₈alkyl, C₁-C₁₈alkoxy, di(C₁-C₄alkyl)amino, hydroxyl or 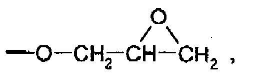
R₄₅ is hydrogen, C₁-C₁₈alkyl, C₁-C₁₈alkoxy or 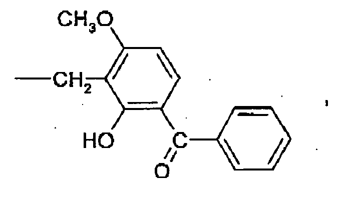
R₄₆ and R₄₇ are each independently of the other hydrogen, hydroxyl, C₁-C₁₈alkyl, phenyl, C₁-C₁₈alkoxy or C₇-C₉phenylakyl,
R₄₈ is a direct bond or oxygen,
R₄₉ and R₅₀ are each independently of the other C₁-C₁₈alkyl, C₇-C₉phenylalkyl, cyclohexyl, phenyl, or phenyl substituted by 1 to 3 alkyl radicals having in total 1 to 18 carbon atoms, R₅₁, R₅₂ and R₅₃ are each independently of the others hydrogen, halogen C₁-C₄alkyl or C₁-C₄alkoxy,
R₅₄ is C₁-C₂₀alkyl, C₅-C₈cycloalkyl, C₇-C₉phenylalkyl or phenyl,
R₅₅ is C₁-C₂₅alkyl,
R₅₆ is methylene or ethylene,
R₅₇ is methylene or ethylene,
R₆₂ is hydrogen or C₁-C₁₈alkyl,
R₆₃ and R₆₄ are each independently of the other hydrogen, C₁-C₁₈alkyl, C₁-C₁₈alkoxy, C₁-C₄alkylthio, morpholinyl, C₇-C₉phenylalkyl of phenyl,
R₆₅ and R₆₆ are each independently of the other C₁-C₁₈alkyl,
R₆₇ is C₂-C₄alkylene,
R₆₈ is hydrogen or C₁-C₁₈alkyl,
R₆₉ is C₃-C₇alkylene,
R₇₀ and R₇₁ are each independently of the other C₁-C₈alkyl or C₇-C₉phenylalkyl,
R₇₂ and R₇₃ are each independently of the other C₁-C₈alkyl or R₇₂ and R₇₃ are together -CH₂CH₂-O-CH₂CH₂- thus forming with the nitrogen atom to which they are attached a morpholinyl ring,
R₇₄ is hydrogen, C₁-C₁₈alkyl or C₇-C₉phenylalkyl, and
x is 1, 2 or 3.

10. A composition according to claim 1, wherein component (b) is present in an amount from 0.01 to 10 %, based on the weight of component (a).

11. A composition according to claim 1, wherein additional additives are present besides the components (a) and (b).

12. A composition according to claim 1, wherein the component (b) is present in the form of a masterbatch or a colloidal sol or organosol containing 5 to 50 % by weight of component (b).

13. A product obtainable by reacting a nano-scaled filler having a particle size of less than 200 nm with a compound of the formula I
AD-L-RG (I)
wherein
AD is an additive selected from the group of radical scavengers, hydroperoxide decomposers, UV-absorbers, light stabilizers, flame retardants or photoinitiators,
L is a direct bond, 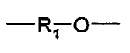 or 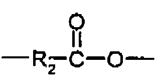 with the proviso that the oxygen atom is attached to AD; C₁-C₂₅alkylene, C₂-C₂₅alkylene interrupted by -O-, -S-, -SO-, -SO₂-, 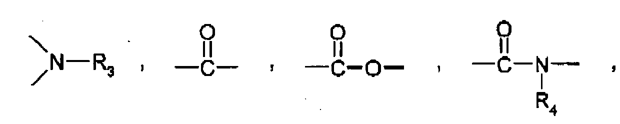 phenylene or C₅-C₈cycloalkylene; or a block-graft copolymer,
RG is 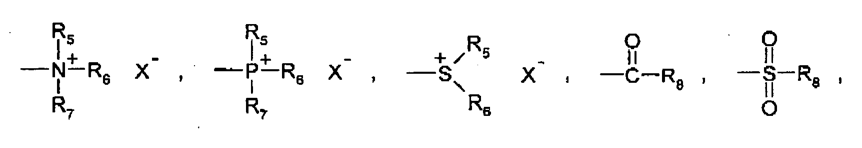 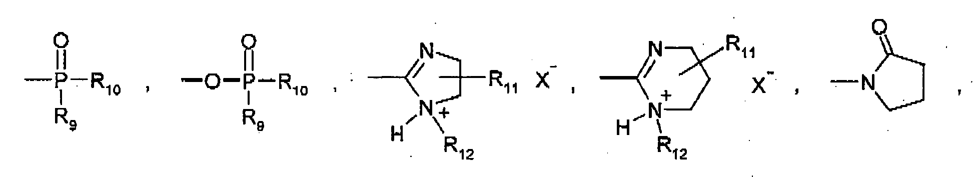 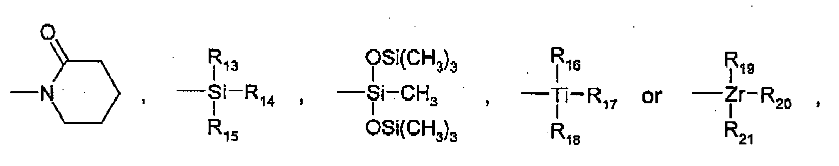 wherein
R₁ is C₁-C₁₈alkylene,
R₂ is a direct bond or C₁-C₁₈alkylene,
R₃ is hydrogen or C₁-C₈alkyl,
R₄ is hydrogen or C₁-C₄alkyl,
R₅, R₆ and R₇ are each independently of the others hydrogen, C₁-C₂₅alkyl, phenyl or C₇-C₂₅phenylalkyl,
R₈, R₉ and R₁₀ are each independently of the others hydroxyl, 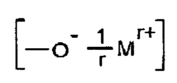 or 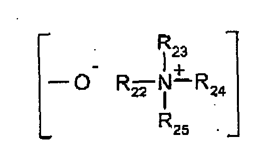
R₁₁ is hydrogen or C₁-C₂₅alkyl,
R₁₂ is hydrogen or C₁-C₂₅alkyl, C₃-C₂₅alkyl interrupted by oxygen, sulfur or by 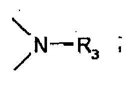 or C₂-C₂₄alkenyl,
R₁₃, R₁₄ and R₁₅ are each independently of the others halogen, amino, C₁-C₂₅alkoxy or C₁-C₂₅alkyl, with the proviso that at least one radical of R₁₃, R₁₄ and R₁₅ is different from C₁-C₂₅alkyl,
R₁₆, R₁₇ and R₁₈ are each independently of the others C₁-C₁₂alkoxy or C₂-G₂₅alkanoyloxy,
R₁₉, R₂₀ and R₂₁ are each independently of the others C₁-C₁₂alkoxy, C₂-C₂₅alkanoyloxy or benzoyloxy,
R₂₂, R₂₃, R₂₄ and R₂₅ are each independently of the others hydrogen, C₁-C₂₅alkyl or hydroxyl-substituted C₂-C₂₄alkyl,
M is a r-valent metal cation,
X⁻ is fluoride, chloride, bromide, iodide, nitrite, nitrate, hydroxide, acetate, hydrogen sulfate, sulfate, methyl sulfate or mixtures thereof, and
ris1,2or3
wherein the reaction is carried out in a suspension or solution in a solvent, in a pH range of from 11 to 3 and at a temperature of from 20 to 150 °C.

14. A product according to claim 13, wherein
AD is an additive selected from the group of radical scavengers, hydroperoxide decomposers, UV-absorbers, light stabilizers, flame retardants or photoinitiators,
L is a direct bond, 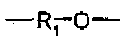 with the proviso that the oxygen atom is attached to AD, 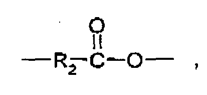 C₁-C₂₅alkylene, C₂-C₂₅alkylene interrupted by -O-, -S-, -SO-, -SO₂-, 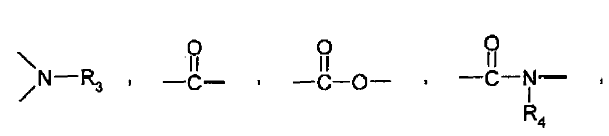 phenylene, C₅-C₈cycloalkylene; or a maleic anhydride-grafted polypropylene,
RG is 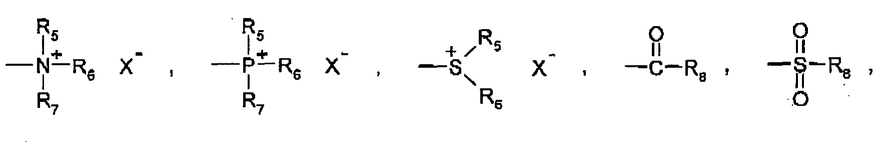 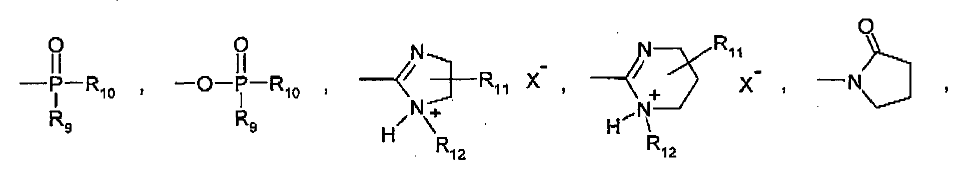 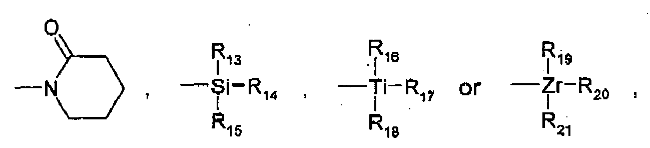 wherein
R₁ is C₁-C₁₈alkylene,
R₂ is a direct bond or C₁-C₁₈alkylene,
R₃ is hydrogen or C₁-C₈alkyl,
R₄ is hydrogen or C₁-C₄alkyl,
R₅, R₆ and R₇ are each independently of the others hydrogen, C₁-C₂₅alkyl, phenyl or C₇-C₂₅phenylalkyl,
R₈, R₉ and R₁₀ are each independently of the others hydroxyl, 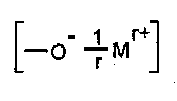 or 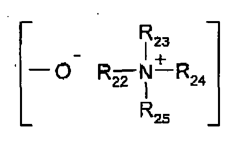
R₁₁ is hydrogen or C₁-C₂₅alkyl,
R₁₂ is hydrogen or C₁-C₂₅alkyl, C₃-C₂₅alkyl interrupted by oxygen, sulfur or by 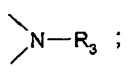 or C₂₇C₂₄alkenyl,
R₁₃, R₁₄ and R₁₅ are each independently of the others halogen; amino, C₁-C₂₅alkoxy or C₁-C₂₅alkyl, with the proviso that at least one radical of R₁₃, R₁₄ and R₁₅ is different from C₁-C₂₅alkyl,
R₁, R₁₇ and R₁₈ are each independently of the others C₁-C₁₂alkoxy or C₂-C₂₅alkanoyloxy,
R₁₉, R₂₀ and R₂₁ are each independently of the others C₁-C₁₂alkoxy, C₂-C₂₅alkanoyloxy or benzoyloxy,
R₂₂, R₂₃, R₂₄ and R₂₅ are each independently of the others hydrogen, C₁-C₂₅alkyl or hydroxyl-substituted C₂-C₂₄alkyl,
M is a r-valent metal cation,
X⁻ is fluoride, chloride, bromide, iodide, nitrite, nitrate, hydroxide, acetate, hydrogen sulfate, sulfate, methyl sulfate or mixtures thereof, and
r is 1, 2 or 3.

15. A process for stabilizing, flame-retarding and/or compatibilizing an organic material which is subject to oxidative, thermal or light-induced degradation, which comprises incorporating therein, or applying thereto, at least one component (b) according to claim 1.

16. A process for photoinitiating in-situ polymerization or hardening of a pre-polymeric nano-composite or sol to a nanocomposite material, which comprises incorporating therein, or applying thereto, at least one component (b) according to claim 1.

17. Use of the component (b) according to claim 1 as stabilizer and/or flame-retarder and/or compatibilizer for organic materials which are subject to oxidative, thermal or light-induced degradation.

18. Use of the component (b) according to claim 1 as photoinitiator for the in-situ polymerization or hardening of pre-polymeric nanocomposites or sols to nanocomposite materials.

## Patentansprüche

1. Zusammensetzung umfassend
a) ein organisches Material, das oxidativem, thermischem oder lichtinduziertem Abbau ausgesetzt wird, und
b) mindestens ein Produkt erhältlich durch Umsetzung eines nanoskaligen Füllstoffes mit einer Partikelgrösse von weniger als 200 nm mit einer Verbindung der Formel I
AD-L-RG (I)
worin
AD ein Additiv ist, ausgewählt aus der Gruppe von Radikalfängern, Hydroperoxidzersetzern, UV-Absorbern, Lichtstabilisatoren, Flammschutzmitteln oder Photoinitiatoren,
L eine direkte Bindung, 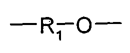 oder 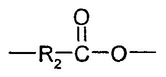 mit der Massgabe, dass das Sauerstoffatom an AD gebunden ist; C₁-C₂₅Alkylen, C₂-C₂₅Alkylen, das von -O-, - S-, -SO-, -SO₂-, 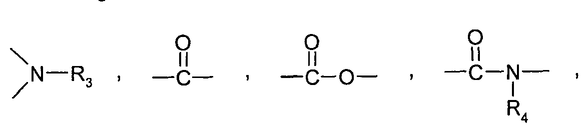 Phenylen oder C₅-C₈Cycloalkylen unterbrochen ist; oder ein Block-Pfropfcopolymer ist,
RG 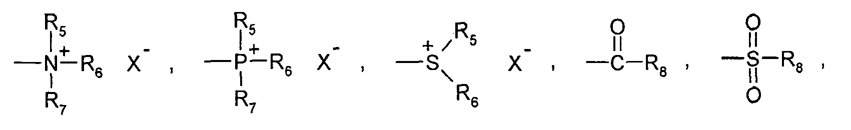 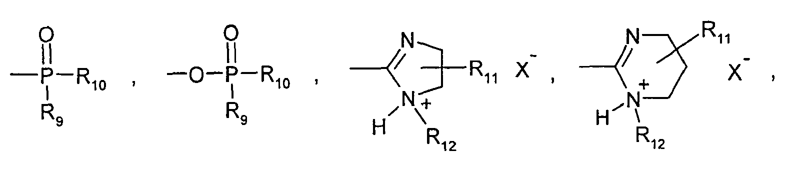 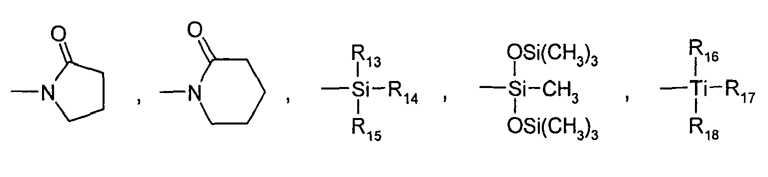 oder 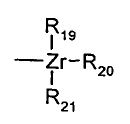 ist,
wobei
R₁ C₁C₁₈Alkylen ist,
R₂ eine direkte Bindung oder C₁-C₁₈Alkylen ist,
R₃ Wasserstoff oder C₁-C₈Alkyl ist,
R₄ Wasserstoff oder C₁-C₄Alkyl ist,
R₅, R₆ und R₇ jeweils unabhängig voneinander Wasserstoff, C₁-C₂₅Alkyl, Phenyl oder C₇-C₂₅Phenylalkyl sind,
R₈, R₉ und R₁₀ jeweils unabhängig voneinander Hydroxyl, 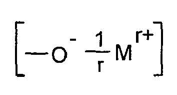 oder 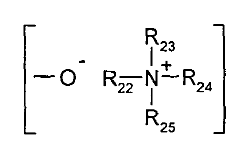 sind,
R₁₁ Wasserstoff oder C₁-C₂₅Alkyl ist,
R₁₂ Wasserstoff oder C₁-C₂₅Alkyl, C₃-C₂₅Alkyl, das von Sauerstoff, Schwefel oder 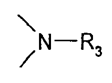 unterbrochen ist; oder C₂-C₂₄Alkenyl ist,
R₁₃, R₁₄ und R₁₅ jeweils unabhängig voneinander Halogen, Amino, C₁-C₂₅Alkoxy oder C₁-C₂₅Alkyl ist, mit der Massgabe, dass mindestens ein Rest von R₁₃, R₁₄ und R₁₅ von C₁-C₂₅Alkyl verschieden ist,
R₁₆, R₁₇ und R₁₈ jeweils unabhängig voneinander C₁-C₁₂Alkoxy oder C₂C₂₅Alkanoyloxy sind,
R₁₉, R₂₀ und R₂₁ jeweils unabhängig voneinander C₁-C₁₂Alkoxy, C₂-C₂₅Alkanoyloxy oder Benzoyloxy sind,
R₂₂, R₂₃, R₂₄ und R₂₅ jeweils unabhängig voneinander Wasserstoff, C₁-C₂₅Alkyl oder Hydroxyl-substituiertes C₂-C₂₄Alkyl sind,
M ein r-valentes Metallkation ist,
X- Fluorid, Chlorid, Bromid, Iodid, Nitrit, Nitrat, Hydroxid, Acetat, Hydrogensulfat, Sulfat, Methylsulfat oder Gemische davon ist, und
r 1, 2 oder 3 ist,
wobei die Reaktion in einer Suspension oder Lösung in einem Lösungsmittel, in einem pH-Bereich von 11 bis 3 und bei einer Temperatur von 20 bis 150 °C durchgeführt wird.

2. Zusammensetzung gemäss Anspruch 1, wobei
AD ein Additiv ist, ausgewählt aus der Gruppe von Radikalfängern, Hydroperoxidzersetzern, UV-Absorbern, Lichtstabilisatoren, Flammschutzmittel oder Photoinitiatoren,
L eine direkte Bindung, 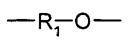 mit der Massgabe, dass das Sauerstoffatom an AD gebunden ist, 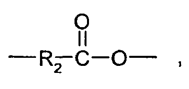 C₁-C₂₅Alkylen, C₂-C₂₅Alkylen, das von -O-, -S-, -SO-, -SO₂-, 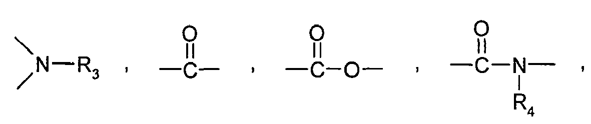 Phenylen oder C₅-C₈Cycloalkylen unterbrochen ist; oder ein Maleinsäureanhydrid-gepfropftes Polypropylen ist,
RG 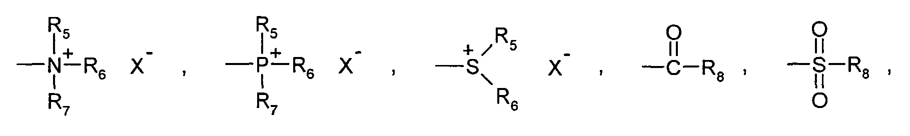 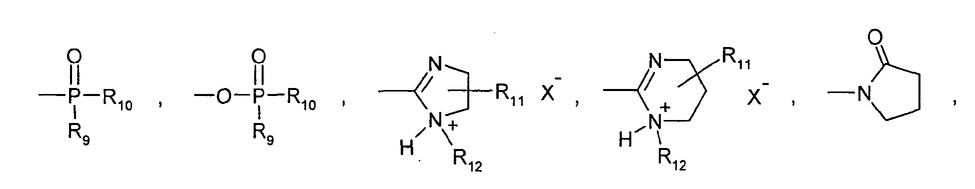 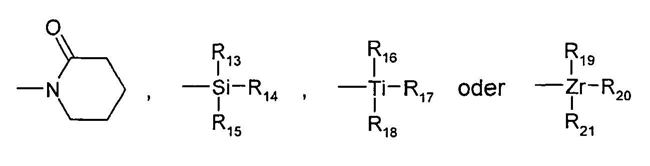 ist,
wobei
R₁ C₁-C₁₈Alkylen ist,
R₂ eine direkte Bindung oder C₁-C₁₈Alkylen ist,
R₃ Wasserstoff oder C₁-C₈Alkyl ist,
R₄ Wasserstoff oder C₁-C₄Alkyl ist,
R₅, R₆ und R₇ jeweils unabhängig voneinander Wasserstoff, C₁-C₂₅Alkyl, Phenyl oder C₇-C₂₅Phenylalkyl sind,
R₈, R₉ und R₁₀ jeweils unabhängig voneinander Hydroxyl, 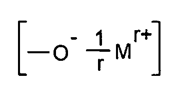 oder 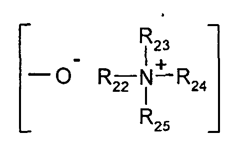 sind
R₁₁ Wasserstoff oder C₁-C₂₅Alkyl ist,
R₁₂ Wasserstoff oder C₁-C₂₅Alkyl, C₃-C₂₅Alkyl, das von Sauerstoff, Schwefel oder 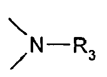 unterbrochen ist; oder C₂-C₂₄Alkenyl ist,
R₁₃, R₁₄ und R₁₅ jeweils unabhängig voneinander Halogen, Amino, C₁-C₂₅Alkoxy oder C₁-C₂₅Alkyl sind, mit der Massgabe, dass mindestens ein Rest von R₁₃, R₁₄ und R₁₅ von C₁-C₂₅Alkyl verschieden ist,
R₁₆, R₁₇ und R₁₈ jeweils unabhängig voneinander C₁-C₁₂Alkoxy oder C₂-C₂₅Alkanoyloxy sind, R₁₉, R₂₀ und R₂₁ jeweils unabhängig voneinander C₁-C₁₂Alkoxy, C₂-C₂₅Alkanoyloxy oder Benzoyloxy sind,
R₂₂, R₂₃, R₂₄ und R₂₅ jeweils unabhängig voneinander Wasserstoff, C₁-C₂₅Alkyl oder Hydroxyl-substituiertes C₂-C₂₄Alkyl sind,
M ein r-valentes Metallkation ist,
X⁻ Fluorid, Chlorid, Bromid, Iodid, Nitrit, Nitrat, Hydroxid, Acetat, Hydrogensulfat, Sulfat, Methylsulfat oder Gemische davon ist, und
r 1, 2 oder 3 ist.

3. Zusammensetzung gemäss Anspruch 1, wobei Komponente (a) ein Präpolymer für ein Nanokomposit-Material ist.

4. Zusammensetzung gemäss Anspruch 1, wobei Komponente (a) ein synthetisches Polymer ist.

5. Zusammensetzung gemäss Anspruch 1, wobei Komponente (a) ein Polyamid oder ein Polyolefin ist.

6. Zusammensetzung gemäss Anspruch 1, wobei der Füllstoff ein organophil modifiziertes natürliches oder synthetisches Phyllosilicat oder ein Gemisch derartiger Phyllosilicate ist.

7. Zusammensetzung gemäss Anspruch 1, wobei der Füllstoff ein organophil modifizierter Montmorillonit, Bentonit, Beidellit, Hectorit, Saponit, Nontronit, Sauconit, Vermiculit, Ledikit, Magadiit, Kenyait oder Stevensit ist.

8. Zusammensetzung gemäss Anspruch 1, wobei AD ein Additiv ist, ausgewählt aus einer Gruppe von phenolischen Antioxidantien, Benzofuran-2-onen, sterisch gehinderten Aminen, aminischen Antioxidantien, 2-(2'-Hydroxyphenyl)benzotriazolen, 2-Hydroxybenzophenonen, 2-(2-Hydroxyphenyl)-1,3,5-triazinen, Phosphiten, Phosphoniten, Thioethern, Benzophenonen, α-activierten Acetophenonen, Bisacylphosphinoxiden (BAPO), Monoacylphosphinoxiden (MAPO), Alkoxaminen, Thioxanthonen, Benzoinen, Benzilketalen, Benzoinethern, α-Hydroxy-alkylphenonen oder α-Aminoalkylphenonen.

9. Zusammensetzung gemäss Anspruch 1, wobei AD 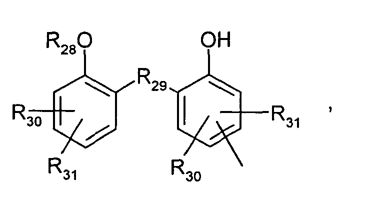 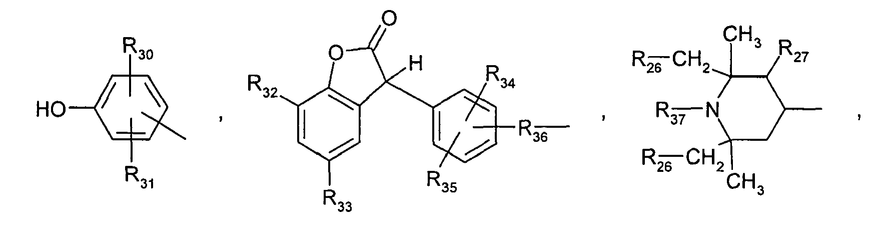 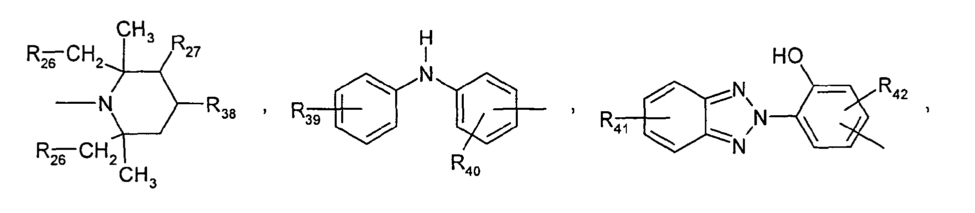 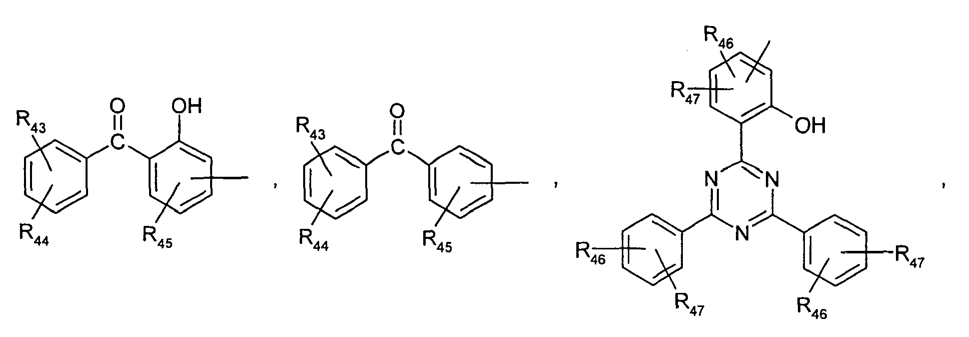 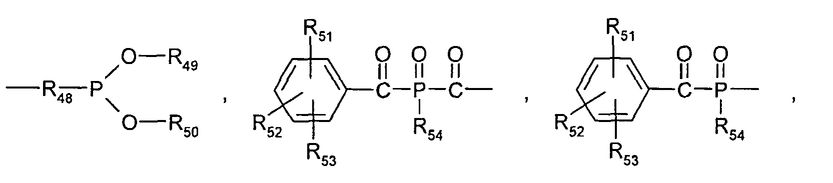 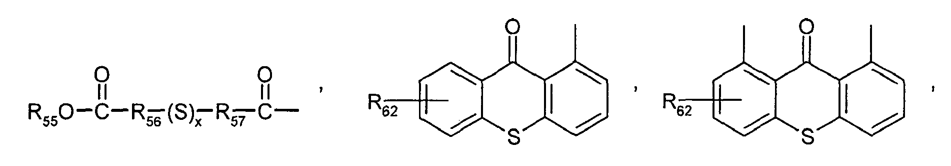 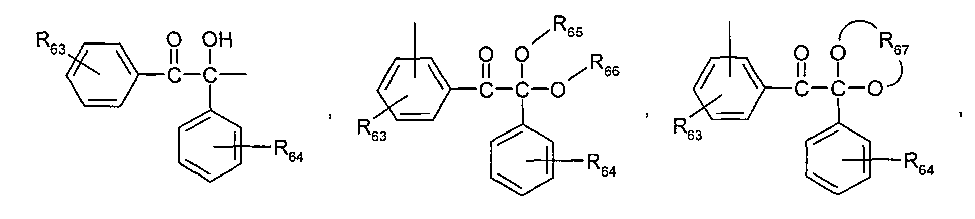 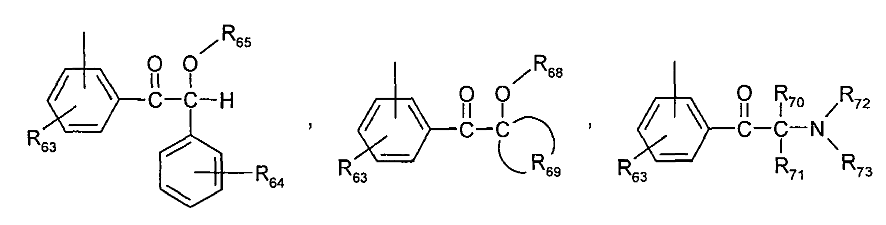 or 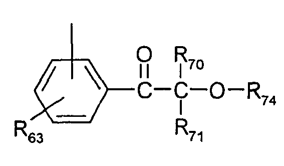 ist,
wobei
R₂₆ Wasserstoff oder Methyl ist, R₂₇ Wasserstoff oder Methyl ist,
R₂₈ Wasserstoff oder 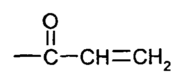 ist,
R₂₉ C₁-C₄Alkylen ist,
R₃₀ und R₃₁ jeweils unabhängig voneinander Wasserstoff, C₁-C₁₈Alkyl, C₇-C₉Phenylalkyl, Phenyl oder C₅-C₈Cycloalkyl sind,
R₃₂ und R₃₃ jeweils unabhängig voneinander Wasserstoff, C₁-C₁₈Alkyl, C₇-C₉Phenylalkyl, Phenyl oder C₅-C₈Cycloalkyl sind,
R₃₄ und R₃₅ jeweils unabhängig voneinander Wasserstoff, Halogen, C₁-C₄Alkyl, -CN, Trifluormethyl oder C₁-C₄Alkoxy sind,
R₃₆ eine direkte Bindung oder -O- ist,
R₃₇ Wasserstoff, -O^{·}, C₁-C₂Alkyl, C₂-C₂₀Alkenyl, C₂-C₂₀Alkinyl, C₁-C₂₀Alkoxy, C₅-C₁₂Cycloalkoxy, C₇-C₂₅Aralkoxy, C₆-C₁₂Aryloxy, C₇-C₉Phenylalkyl, C₅-C₁₂Cycloalkyl, Phenyl, Naphthyl, Hydroxyethyl, C₂-C₂₅Alkanoyl, Benzoyl, Naphthoyl oder C₂-C₂₀Alkoxyalkanoyl ist, R₃₈ Wasserstoff oder ein organisches Rest ist,
R₃₉ und R₄₀ jeweils unabhängig voneinander Wasserstoff, C₁-C₁₈Alkyl, C₇-C₉Phenylalkyl oder Phenyl sind,
R₄₁ Wasserstoff, Halogen oder C₁-C₁₈Alkyl ist,
R₄₂ Wasserstoff, C₁-C₁₈Alkyl oder C₇-C₉Phenylalkyl ist,
R₄₃ und R₄₄ jeweils unabhängig voneinander Wasserstoff, C₁-C₁₈Alkyl, C₁-C₁₈Alkoxy, Di(C₁-C₄alkyl)amino, Hydroxyl oder 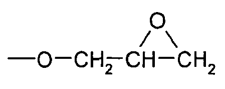 sind,
R₄₅ Wasserstoff, C₁-C₁₈Alkyl, C₁-C₁₈Alkoxy oder 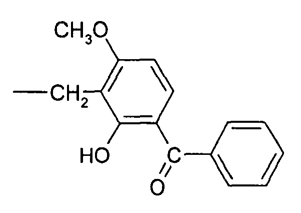 ist,
R₄₆ und R₄₇ jeweils unabhängig voneinander Wasserstoff, Hydroxyl, C₁-C₁₈Alkyl, Phenyl, C₁-C₁₈Alkoxy oder C₇-C₉Phenylalkyl sind,
R₄₈ eine direkte Bindung oder Sauerstoff ist,
R₄₉ und R₅₀ jeweils unabhängig voneinander C₁-C₁₈Alkyl, C₇-C₉Phenylalkyl, Cyclohexyl, Phenyl, oder Phenyl, das mit 1 bis 3 Alkylresten mit insgesamt 1 bis 18 Kohlenstoffatomen substituiert ist, sind,
R₅₁, R₅₂ und R₅₃ jeweils unabhängig voneinander Wasserstoff, Halogen C₁-C₄Alkyl oder C₁-C₄Alkoxy sind,
R₅₄ C₁-C₂₀Alkyl, C₅-C₈Cycloalkyl, C₇-C₉Phenylalkyl oder Phenyl ist,
R₅₅ C₁-C₂₅Alkyl ist,
R₅₆ Methylen oder Ethylen ist,
R₅₇ Methylen oder Ethylen ist,
R₆₂ Wasserstoff oder C₁-C₁₈Alkyl ist,
R₆₃ und R₆₄ jeweils unabhängig voneinander Wasserstoff, C₁-C₁₈Alkyl, C₁-C₁₈Alkoxy,
C₁-C₄Alkylthio, Morpholinyl, C₇-C₉Phenylalkyl or Phenyl sind,
R₆₅ und R₆₆ jeweils unabhängig voneinander C₁-C₁₈A1kyl sind,
R₆₇ C₂-C₄Alkylen ist,
R₆₈ Wasserstoff oder C₁-C₁₈Alkyl ist,
R₆₉ C₃-C₇Alkylen ist,
R₇₀ und R₇₁ jeweils unabhängig voneinander C₁-C₈Alkyl oder C₇-C₉Phenylalkyl sind,
R₇₂ und R₇₃ jeweils unabhängig voneinander C₁-C₈Alkyl sind, oder R₇₂ und R₇₃ sind zusammen -CH₂CH₂-O-CH₂CH₂-, wobei sie mit dem Stickstoffatom, an das sie gebunden sind, einen Morpholinring bilden,
R₇₄ Wasserstoff, C₁-C₁₈Alkyl oder C₇-C₉Phenylalkyl ist, und
x 1, 2 oder 3 ist.

10. Zusammensetzung gemäss Anspruch 1, wobei Komponente (b) in einer Menge von 0,01 bis 10 %, bezogen auf das Gewicht der Komponente (a), vorliegt.

11. Zusammensetzung gemäss Anspruch 1, wobei zusätzliche Additive neben den Komponenten (a) und (b) vorliegen.

12. Zusammensetzung gemäss Anspruch 1, wobei die Komponente (b) in Form eines Masterbatches oder eines kolloidalen Sols oder Organosols vorliegt, die 5 bis 50 Gew.-% der Komponente (b) enthalten.

13. Produkt erhältlich durch Umsetzen eines nanoskaligen Füllstoffes mit einer Partikelgrösse von weniger als 200 nm mit einer Verbindung der Formel I
AD-L-RG (I)
worin
AD ein Additiv ist, ausgewählt aus der Gruppe von Radikalfängern, Hydroperoxidzersetzern, UV-Absorbern, Lichtstabilisatoren, Flammschutzmitteln oder Photoinitiatoren,
L eine direkte Bindung, 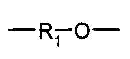 oder 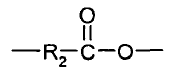 mit der Massgabe, dass das Sauerstoffatom an AD gebunden ist; C₁-C₂₅Alkylen, C₂-C₂₅Alkylen, das von -O-, -S-, -SO-, - SO₂-, 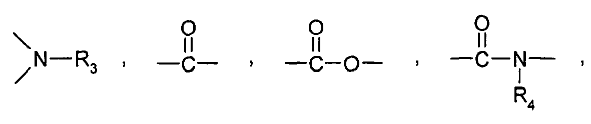 Phenylen oder C₅-C₈Cycloalkylen unterbrochen ist; oder ein Block-Pfropfcopolymer ist,
RG 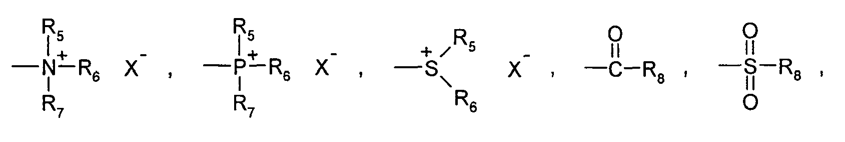 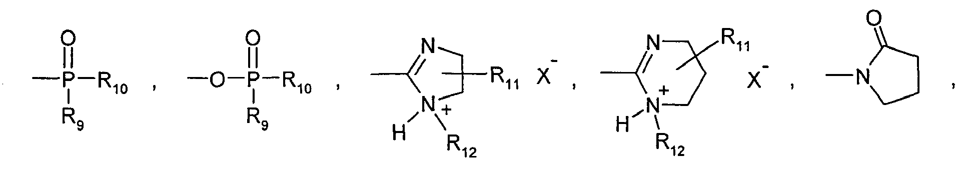 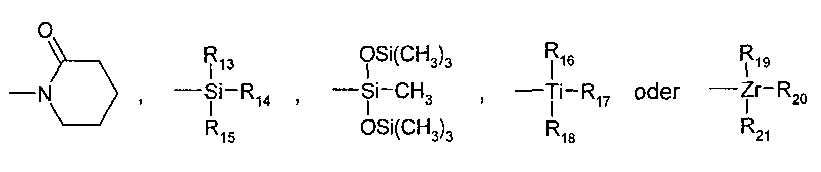 ist,
wobei
R₁ C₁-C₁₈Alkylen ist,
R₂ eine direkte Bindung oder C₁-C₁₈Alkylen ist,
R₃ Wasserstoff oder C₁-C₈Alkyl ist,
R₄ Wasserstoff oder C₁-C₄Alkyl ist,
R₅, R₆ und R₇ jeweils unabhängig voneinander Wasserstoff, C₁-C₂₅Alkyl, Phenyl oder C₇-C₂₅Phenylalkyl sind,
R₈, R₉ und R₁₀ jeweils unabhängig voneinander Hydroxyl, 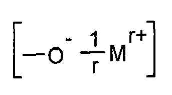 oder 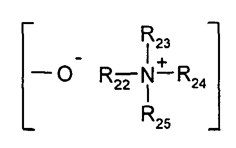 sind,
R₁₁ Wasserstoff oder C₁-C₂₅Alkyl ist,
R₁₂ Wasserstoff oder C₁-C₂₅Alkyl, C₃-C₂₅Alkyl, das von Sauerstoff, Schwefel oder 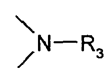 unterbrochen ist; oder C₂-C₂₄Alkenyl ist,
R₁₃, R₁₄ und R₁₅ jeweils unabhängig voneinander Halogen, Amino, C₁-C₂₅Alkoxy oder C₁-C₂₅Alkyl sind, mit der Massgabe, dass mindestens ein Rest von R₁₃, R₁₄ und R₁₅ von C₁-C₂₅Alkyl verschieden ist,
R₁₆, R₁₇ und R₁₈ jeweils unabhängig voneinander C₁-C₁₂Alkoxy oder C₂-C₂₅Alkanoyloxy sind, R₁₉, R₂₀ und R₂₁ jeweils unabhängig voneinander C₁-C₁₂Alkoxy, C₂-C₂₅Alkanoyloxy oder Benzoyloxy sind,
R₂₂, R₂₃, R₂₄ und R₂₅ jeweils unabhängig voneinander Wasserstoff, C₁-C₂₅Alkyl oder Hydroxyl-substituiertes C₂-C₂₄Alkyl sind,
M ein r-valentes Metallkation ist,
X- Fluorid, Chlorid, Bromid, Iodid, Nitrit, Nitrat, Hydroxid, Acetat, Hydrogensulfat, Sulfat, Methylsulfat oder Gemische davon ist, und
r 1, 2 oder 3 ist,
wobei die Reaktion in einer Suspension oder Lösung in einem Lösungsmittel, in einem pH-Bereich von 11 bis 3 und bei einer Temperatur von 20 bis 150 °C durchgeführt wird.

14. Produkt gemäss Anspruch 13, wobei
AD ein Additiv ist, ausgewählt aus der Gruppe von Radikalfängern, Hydroperoxidzersetzern, UV-Absorbern, Lichtstabilisatoren, Flammschutzmitteln oder Photoinitiatoren,
L eine direkte Bindung, 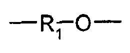 mit der Massgabe, dass das Sauerstoffatom an AD gebunden ist, 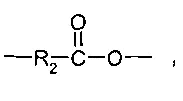 C₁-C₂₅Alkylen, C₂-C₂₅Alkylen, das von -O-, -S-, -SO-, -SO₂-, 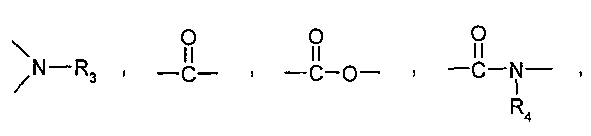 Phenylen, C₅-C₈Cycloalkylen unterbrochen ist; oder ein Maleinsäureanhydrid-gepfropftes Polypropylen ist,
RG 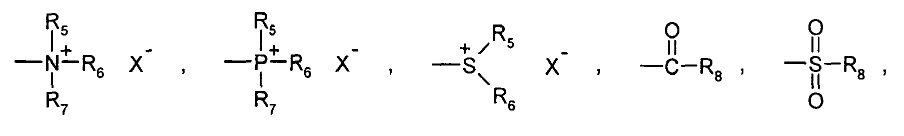 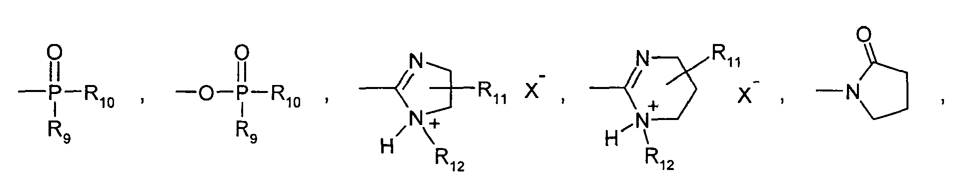 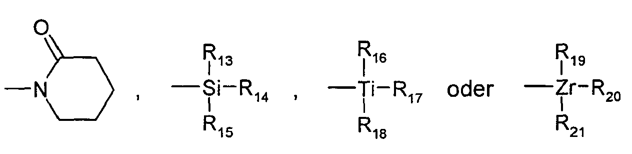 ist,
wobei
R₁ C₁-C₁₈Alkylen ist,
R₂ eine direkte Bindung oder C₁-C₁₈Alkylen ist,
R₃ Wasserstoff oder C₁-C₈Alkyl ist,
R₄ Wasserstoff oder C₁-C₄Alkyl ist,
R₅, R₆ und R₇ jeweils unabhängig voneinander Wasserstoff, C₁-C₂₅Alkyl, Phenyl oder C₇-C₂₅Phenylalkyl sind,
R₈, R₉ und R₁₀ jeweils unabhängig voneinander Hydroxyl, 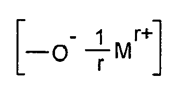 oder 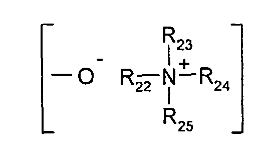 sind,
R₁₁ Wasserstoff oder C₁-C₂₅Alkyl ist,
R₁₂ Wasserstoff oder C₁-C₂₅Alkyl, C₃-C₂₅Alkyl, das von Sauerstoff, Schwefel oder 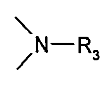 unterbrochen ist, oder C₂-C₂₄Alkenyl ist,
R₁₃, R₁₄ und R₁₅ jeweils unabhängig voneinander Halogen, Amino, C₁-C₂₅Alkoxy oder C₁-C₂₅Alkyl sind, mit der Massgabe, dass mindestens ein Rest von R₁₃, R₁₄ und R₁₅ von C₁-C₂₅Alkyl verschieden ist,
R₁₆, R₁₇ und R₁₈ jeweils unabhängig voneinander C₁-C₁₂Alkoxy oder C₂-C₂₅-Alkanoyloxy sind, R₁₉, R₂₀ und R₂₁ jeweils unabhängig voneinander C₁-C₁₂Alkoxy, C₂-C₂₅Alkanoyloxy oder Benzoyloxy sind,
R₂₂, R₂₃, R₂₄ und R₂₅ jeweils unabhängig voneinander Wasserstoff, C₁-C₂₅Alkyl oder Hydroxyl-substituiertes C₂-C₂₄Alkyl sind,
M ein r-valentes Metallkation ist,
X⁻ Fluorid, Chlorid, Bromid, lodid, Nitrit, Nitrat, Hydroxid, Acetat, Hydrogensulfat, Sulfat, Methylsulfat oder Gemische davon ist, und
r 1, 2 oder 3 ist.

15. Verfahren zur Stabilisierung, zum Flammschutz und/oder Kompatibilisierung eines organischen Materials, welches oxidativem, thermischem oder lichtinduziertem Abbau ausgesetzt wird, das das darin Einarbeiten oder darauf Aufbringen von mindestens einer Komponente (b) gemäss Anspruch 1 umfasst.

16. Verfahren zur Photoinitiierung der in-situ-Polymerisation oder des Härtens eines präpolymeren Nanokomposits oder Sols zu einem Nanokompositmaterial, das das darin Einarbeiten oder darauf Aufbringen von mindestens einer Komponente (b) gemäss Anspruch 1 umfasst.

17. Verwendung der Komponente (b) gemäss Anspruch 1 als Stabilisator und/oder Flammschutzmittel und/oder Kompatibilisator für organische Materialien, welche oxidativem, thermischem oder lichtinduziertem Abbau ausgesetzt werden.

18. Verwendung der Komponente (b) gemäss Anspruch 1 als Photoinitiator für die in-situ-Polymerisation oder das Härten von präpolymeren Nanokompositen oder Solen zu Nanokompositmaterialien.

## Revendications

1. Composition comprenant
a) un matériau organique sujet à une dégradation oxydante, thermique ou induite par la lumière, et
b) au moins un produit qui peut être obtenu en réagissant une charge nanométrique présentant une taille des particules inférieure à 200 nm avec un composé de formule I
**AD-L-RG** **(I)**
dans laquelle,
AD est un additif sélectionné à partir du groupe composé de désactivateurs de radicaux, de décomposeurs d'hydroperoxyde, d'absorbeurs d'UV, de stabilisateurs de la lumière, d'ignifugeants ou de photoinitiateurs,
L est une liaison directe, 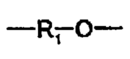 ou 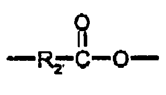 à condition que l'atome d'oxygène soit attaché à AD ; C₁-C₂₅alkylène, C₂-C₂₅alkylène interrompu par -O-, -S-, -SO-, -SO₂-, 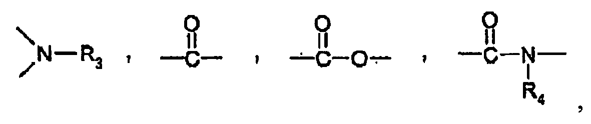 phénylène ou C₅-C₈cycloalkylène ; ou un copolymère à blocs greffé,
RG est 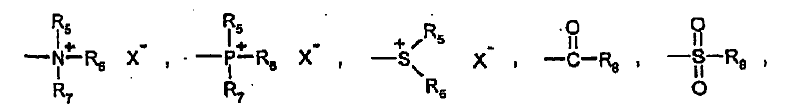 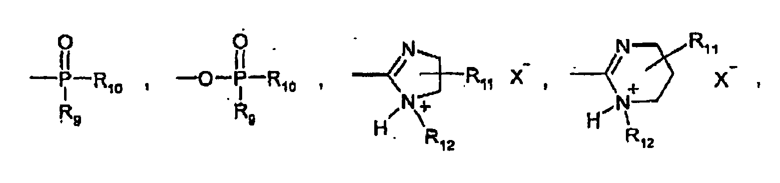 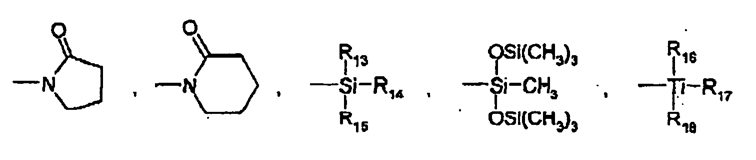 ou 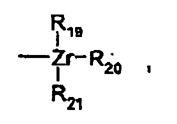 dans laquelle,
R₁ est C₁-C₁₈alkylène,
R₂ est une liaison directe ou C₁-C₁₈alkylène,
R₃ est hydrogène ou C₁-C₈alkyle,
R₄ est hydrogène ou C₁-C₄alkyle,
R₅, R₆ et R₇ sont chacun indépendamment les uns des autres hydrogène, C₁-C₂₅alkyle, phényle ou C₇-C₂₅phénylalkyle,
R₈, R₉ et R₁₀ sont chacun indépendamment les uns des autres hydroxyle, 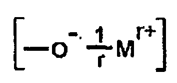 ou 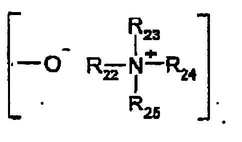
R₁₁ est hydrogène ou C₁-C₂₅alkyle,
R₁₂ est hydrogène ou C₁-C₂₅allyle, C₃-C₂₅alkyle interrompu par oxygène, soufre ou par 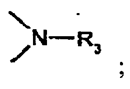 ou C₂-C₂₄alkényle,
R₁₃, R₁₄ et R₁₅ sont chacun indépendamment les uns des autres halogène, amino, C₁-C₂₅alcoxy ou C₁-C₂₅alkyle, à condition qu'au moins un radical de
R₁₃, R₁₄ et R₁₅ soit différent de C₁-C₂₅alkyle,
R₁₆, R₁₇ et R₁₈ sont chacun indépendamment les uns des autres C₁-C₁₂alcoxy ou C₂-C₂₅alkanoyloxy,
R₁₉, R₂₀ et R₂₁ sont chacun indépendamment les uns des autres C₁-C₁₂alcoxy, C₂-C₂₅alkanoyloxy ou benzoyloxy,
R₂₂, R₂₃, R₂₄ et R₂₅ sont chacun indépendamment les uns des autres hydrogène, C₁-C₂₅alkyle ou C₂-C₂₄alkyle substitué par hydroxyle
M est un cation métallique r-valent,
X⁻ est fluor, chlore, brome, iode, nitrite, nitrate, hydroxyde, acétate, sulfate d'hydrogène, sulfate, sulfate de méthyle ou des mélanges de ceux-ci, et
r est 1, 2 ou 3
**caractérisé en ce que** la réaction est réalisée dans une suspension ou solution dans un solvant, selon un pH compris dans la gamme allant de 11 à 3 et à une température comprise dans la gamme allant de 20 à 150°C.

2. Composition selon la revendication 1, **caractérisée en ce que**
AD est un additif sélectionné à partir du groupe composé de désactivateurs de radicaux, de décomposeurs d'hydroperoxyde, d'absorbeurs d'UV, de stabilisateurs de la lumière, d'ignifugeants ou de photoinitiateurs,
L est une liaison directe, 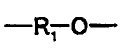 à condition que l'atome d'oxygène soit attaché à AD ; 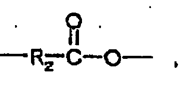 C₁-C₂₅alkylène, C₂-C₂₅alkylène interrompu par -O-, -S-, -SO-, -SO₂-, 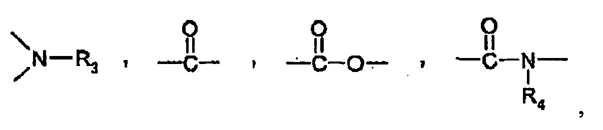 phénylène ou C₅-C₈cycloalkylène ; ou un anhydride maléique - polypropylène greffé,
RG est 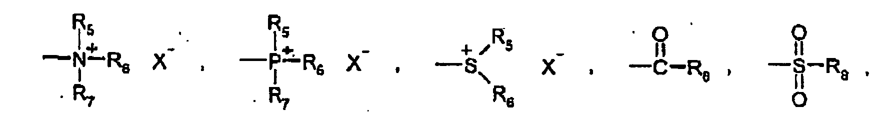 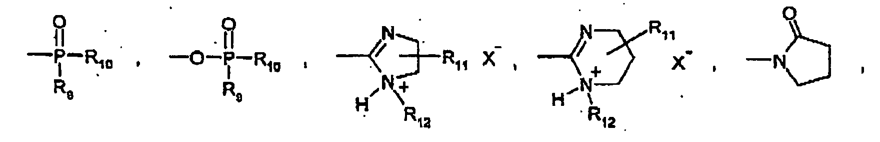 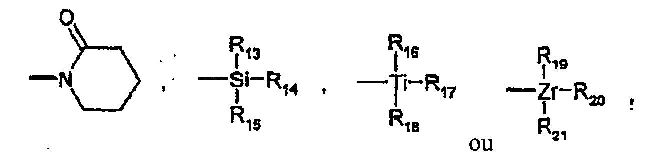 dans laquelle,
R₁ est C₁-C₁₈alkylène,
R₂ est une liaison directe ou C₁-C₁₈alkylène,
R₃ est hydrogène ou C₁-C₈alkyle,
R₄ est hydrogène ou C₁-C₄alkyle,
R₅, R₆ et R₇ sont chacun indépendamment les uns des autres hydrogène, C₁-C₂₅alkyle, phényle ou C₇-C₂₅phénylalkyle,
R₈, R₉ et R₁₀ sont chacun indépendamment les uns des autres hydroxyle, 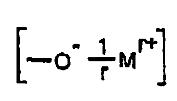 ou 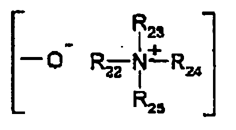
R₁₁ est hydrogène ou C₁-C₂₅alkyle,
R₁₂ est hydrogène ou C₁-C₂₅allyle, C₃-C₂₅alkyle interrompu par oxygène, soufre ou par 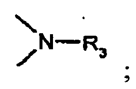 ou C₂-C₂₄alkényle,
R₁₃, R₁₄ et R₁₅ sont chacun indépendamment les uns des autres halogène, amino, C₁-C₂₅alcoxy ou C₁-C₂₅alkyle, à condition qu'au moins un radical de R₁₃, R₁₄ et R₁₅ soit différent de C₁-C₂₅alkyle,
R₁₆, R₁₇ et R₁₈ sont chacun indépendamment les uns des autres C₁-C₁₂alcoxy ou C₂-C₂₅alkanoyloxy,
R₁₉, R₂₀ et R₂₁, sont chacun indépendamment les uns des autres C₁-C₁₂alcoxy, C₂-C₂₅alkanoyloxy ou benzoyloxy,
R₂₂, R₂₃, R₂₄ et R₂₅ sont chacun indépendamment les uns des autres hydrogène, C₁-C₂₅alkyle ou C₂-C₂₄alkyle substitué par hydroxyle
M est un cation métallique r-valent,
X⁻ est fluor, chlore, brome, iode, nitrite, nitrate, hydroxyde, acétate, sulfate d'hydrogène, sulfate, sulfate de méthyle ou des mélanges de ceux-ci, et
r est 1,2 ou 3.

3. Composition selon la revendication 1, **caractérisée en ce que** le composant (a) est un pré-polymère fabriqué à partir d'un matériau nano-composite.

4. Composition selon la revendication 1, **caractérisée en ce que** le composant (a) est un polymère synthétique.

5. Composition selon la revendication 1, **caractérisée en ce que** le composant (a) est un polyamide ou une polyoléfine.

6. Composition selon la revendication 1, **caractérisée en ce que** la charge est un phyllosilicate naturel ou synthétique modifié d'un point de vue organophilique ou un mélange de ces phyllosilicates.

7. Composition selon la revendication 1, **caractérisée en ce que** la charge est une montmorillonite, une bentonite, une beidellite, une hectorite, une saponite, une nontronite, une sauconite, une vermiculite, une ledikite, une magadiite, une kenyaite ou un stevensite modifié d'un point de vue organophilique.

8. Composition selon la revendication 1, **caractérisée en ce que** AD est un additif sélectionné à partir du groupe composé des anti-oxydants phénoliques, des benzofuran-2-ones, des amines avec encombrement stérique, des anti-oxydants aminiques, des 2-(2'-hydroxyphényl)benzotriazoles, des 2-hydroxybenzo-phénones, des 2-(2-hydroxyphényl)-1,3,5-triazines, des phosphites, des phosphonites, des thioéthers, des benzophénones, des acétophénones α-activés, des bisacylphosphinoxydes (BAPO), des monoacylphosphinoxydes (MAPO), des alcoxamines, des thioxanthones, des benzoïnes, des benzil ketals, des éthers de benzoïne, des α-hydroxy-alkylphénones ou des α-aminoalkylphénones.

9. Composition selon la revendication 1, **caractérisée en ce que** AD est 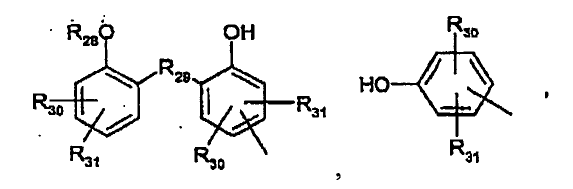 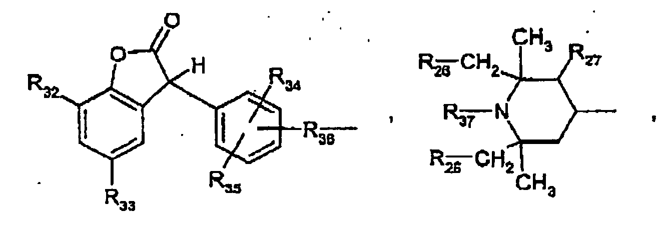 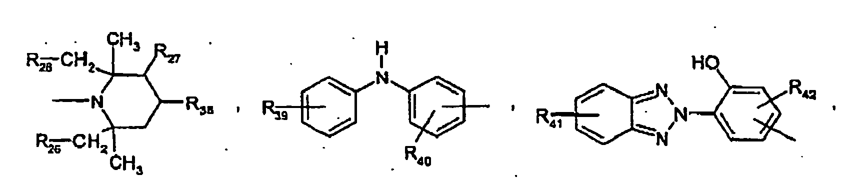 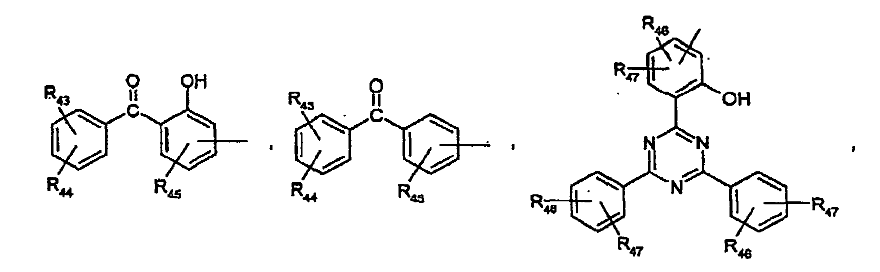 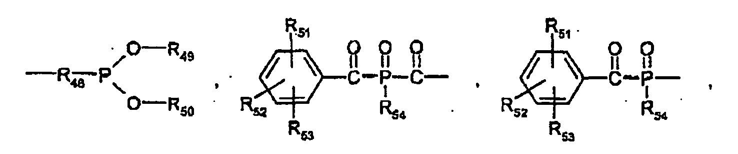 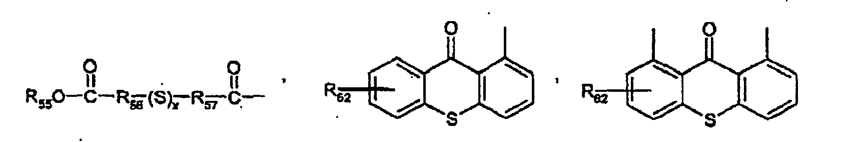 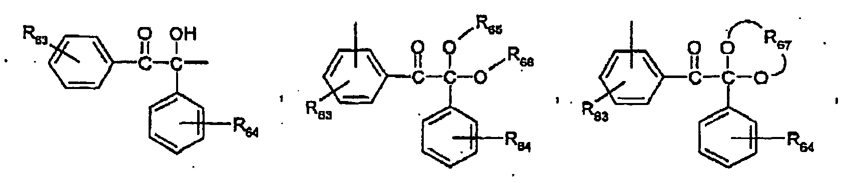 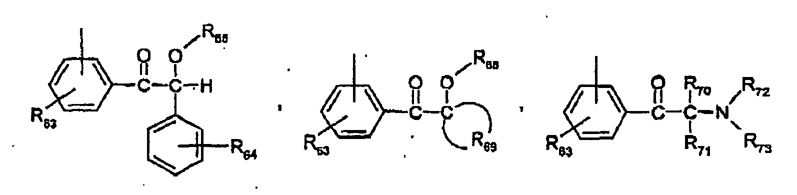 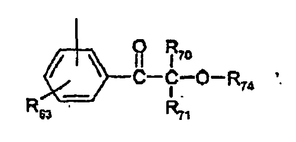 dans laquelle,
R₂₆ est hydrogène ou méthyle,
R₂₇ est hydrogène ou méthyle,
R₂₈ est hydrogène ou 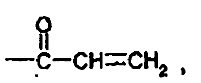
R₂₉ est C₁-C₄alkylène,
R₃₀ et R₃₁ sont, chacun indépendamment l'un de l'autre, hydrogène, C₁-C₁₈alkyle, C₇-C₉phénylalkyle, phényle ou C₅-C₈cycloalkyle,
R₃₂ et R₃₃ sont, chacun indépendamment l'un de l'autre, hydrogène, C₁-C₁₈alkyle, C₇-C₉phénylalkyle, phényle ou C₅-C₈cycloalkyle,
R₃₄ et R₃₅ sont, chacun indépendamment l'un de l'autre, hydrogène, halogène, C₁-C₄alkyle, -CN, trifluorométhyle ou C₁-C₄alcoxy,
R₃₆ est une liaison directe ou -O-,
R₃₇ est hydrogène, -O*, C₁-C₂₅alkyle, C₂-C₂₀alkényle, C₂-C₂₀alkinyle, C₁-C₂₀alcoxy, C₅-C₁₂cycloalcoxy, C₇-C₂₅aralcoxy, C₆-C₁₂aryloxy, C₇-C₉phénylalkyle, C₅-C₁₂cycloalkyle, phényle, naphtyle, hydroxyéthyle, C₂-C₂₅alkanoyle, benzoyle, naphtoyle ou C₂-C₂₀alcoxyalkanoyle,
R₃₈ est hydrogène ou un radical organique,
R₃₉ et R₄₀ sont, chacun indépendamment l'un de l'autre, hydrogène, C₁-C₁₈alkyle, C₇-C₉phénylalkyle ou phényle,
R₄₁ est hydrogène, halogène ou C₁-C₁₈alkyle,
R₄₂esthydrogène, C₁-C₁₈alkyle ou C₇-C₉phénylalkyle,
R₄₃ et R₄₄ sont, chacun indépendamment l'un de l'autre, hydrogène, C₁-C₁₈alkyle, C₁-C₁₈alcoxy, di(C₁-C₄alkyl)amino, hydroxyle ou 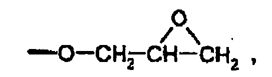
R₄₅ est hydrogène, C₁C₁₈alkyle, C₁-C₁₈alcoxy ou 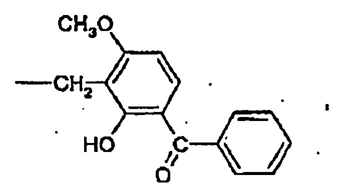
R₄₆ et R₄₇ sont, chacun indépendamment l'un de l'autre, hydrogène, hydroxyle, C₁-C₁₈alkyle, phényle, C₁-C₁₈alcoxy ou C₇-C₉phénylakyle,
R₄₈ est une liaison directe ou oxygène,
R₄₉ et R₅₀ sont, chacun indépendamment l'un de l'autre, C₁-C₁₈alkyle, C₇-C₉phénylalkyle, cyclohexyle, phényle, ou phényle substitué par de 1 à 3 radicaux alkyle possédant au total de 1 à 18 atomes de carbone,
R₅₁, R₅₂ et R₅₃ sont chacun indépendamment les uns des autres hydrogène, halogène C₁-C₄alkyle ou C₁-C₄alcoxy,
R₅₄ est C₁-C₂₀alkyle, C₅-C₈cycloalkyle, C₇-C₉phénylalkyl ou phényle,
R₅₅ est C₁-C₂₅alkyle,
R₅₆ est méthylène ou éthylène,
R₅₇ est méthylène ou éthylène,
R₆₂ est hydrogène ou C₁-C₁₈alkyle,
R₆₃ et R₆₄ sont, chacun indépendamment l'un de l'autre, hydrogène, C₁-C₁₈alkyle, C₁-C₁₈alcoxy, C₁-C₄alkylthio, morpholinyle, C₇-C₉phénylalkyle ou phényle,
R₆₅ et R₆₆ sont, chacun indépendamment l'un de l'autre, C₁-C₁₈alkyle,
R₆₇ est C₂-C₄alkylène,
R₆₈ est hydrogène ou C₁-C₁₈alkyle,
R₆₉ est C₃-C₇alkylène,
R₇₀ et R₇₁ sont, chacun indépendamment l'un de l'autre, C₁-C₈alkyle ou C₇-C₉phénylalkyle,
R₁₂ et R₇₃ sont, chacun indépendamment l'un de l'autre, C₁-C₈alkyle ou R₇₂ et R₇₃ ensemble sont -CH₂CH₂-O-CH₂CH₂- formant ainsi avec l'atome d'azote auquel ils sont attachés un cycle morpholinyle.
R₇₄ est hydrogène, C₁-C₈alkyle ou C₇-C₉phénylalkyle, et
x est 1, 2 ou 3.

10. Composition selon la revendication 1, **caractérisée en ce que** le composant (b) est présent selon une quantité comprise dans la gamme allant de 0,01 à 10 %, sur base du poids du composant (a).

11. Composition selon la revendication 1, **caractérisée en ce que** des additifs supplémentaires sont présents en plus des composants (a) et (b).

12. Composition selon la revendication 1, **caractérisée en ce que** le composant (b) est présent sous forme d'un mélange maître ou d'une sol colloïdale ou d'un organosol contenant une quantité comprise dans la gamme allant de 5 à 50 % en poids du composant (b).

13. Produit obtenu par la réaction d'une charge nanomérique présentant une taille des particules inférieure à 200 nm avec un composé de formule 1
**AD-L-RG** **(I)**
dans laquelle,
AD est un additif sélectionné à partir du groupe composé de désactivateurs de radicaux, de décomposeurs d'hydroperoxyde, d'absorbeurs d'UV, de stabilisateurs de la lumière, d'ignifugeants ou de photoinitiateurs,
L est une liaison directe, 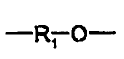 ou 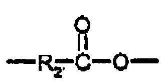 à condition que l'atome d'oxygène soit attaché à AD ; C₁-C₂₅alkylène, C₂-C₂₅alkylène interrompu par -O-, -S-, -SO-, -SO₂-, 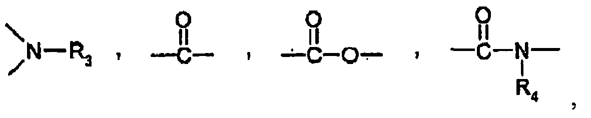 phénylène ou C₅-C₈cycloalkylène ; ou un copolymère à blocs greffé,
RG est 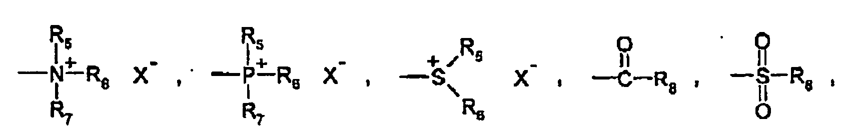 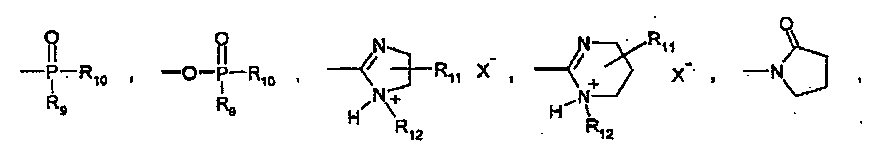 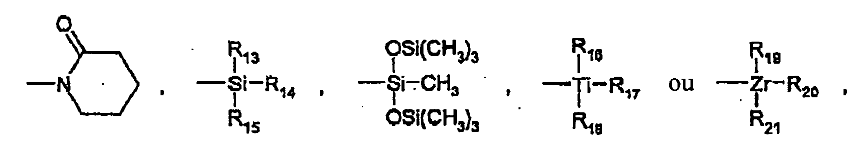 dans laquelle,
R₁ est C₁-C₁₈alkylène,
R₂ est une liaison directe ou C₁-C₁₈alkylène,
R₃ est hydrogène ou C₁-C₈alkyle,
R₄ est hydrogène ou C₁-C₄alkyle,
R₅, R₆ et R₇ sont chacun indépendamment les uns des autres hydrogène, C₁-C₂₅alkyle, phényle ou C₇-C₂₅phénylalkyle,
R₈, R₉ et R₁₀ sont chacun indépendamment les uns des autres hydroxyle, 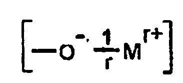 ou 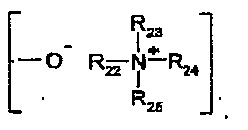
R₁₁ est hydrogène ou C₁-C₂₅alkyle,
R₁₂ est hydrogène ou C₁-C₂₅allyle, C₃-C₂₅alkyle interrompu par oxygène, soufre ou par 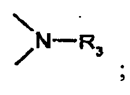 ou C₂-C₂₄alkényle,
R₁₃, R₁₄ et R₁₅ sont chacun indépendamment les uns des autres halogène, amino, C₁-C₂₅alcoxy ou C₁-C₂₅alkyle, à condition qu'au moins un radical de R₁₃, R₁₄ et R₁₅ soit différent de C₁-C₂₅alkyle,
R₁₆, R₁₇ et R₁₈ sont chacun indépendamment les uns des autres C₁-C₁₂alcoxy ou C₂-C₂₅alkanoyloxy,
R₁₉, R₂₀ et R₂, sont chacun indépendamment les uns des autres C₁-C₁₂alcoxy, C₂-C₂₅alkanoyloxy ou benzoyloxy,
R₂₂, R₂₃, R₂₄ et R₂₅ sont chacun indépendamment les uns des autres hydrogène, C₁-C₂₅alkyle ou C₂-C₂₄alkyle substitué par hydroxyle
M est un cation métallique r-valent,
X⁻ est fluor, chlore, brome, iode, nitrite, nitrate, hydroxyde, acétate, sulfate d'hydrogène, sulfate, sulfate de méthyle ou des mélanges de ceux-ci, et
r est 1, 2 ou 3
**caractérisé en ce que** la réaction est réalisée dans une suspension ou solution dans un solvant, selon un pH compris dans la gamme allant de 11 à 3 et à une température comprise dans la gamme allant de 20 à 150°C.

14. Produit selon la revendication 13, **caractérisé en ce que**
AD est un additif sélectionné à partir du groupe composé de désactivateurs de radicaux, de décomposeurs d'hydroperoxyde, d'absorbeurs d'UV, de stabilisateurs de la lumière, d'ignifugeants ou de photoinitiateurs,
L est une liaison directe, 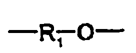 à condition que l'atome d'oxygène soit attaché à AD ; 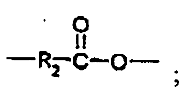 C₁-C₂₅alkylène, C₂-C₂₅alkylène interrompu par -O-, -S-, -SO-, -SO₂-, 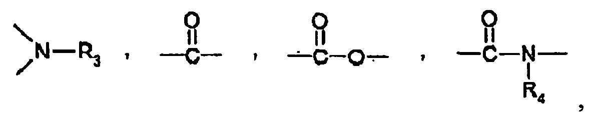 phénylène ou C₅-C₈cycloalkylène ; ou un anhydride maléique - polypropylène greffé,
RG est 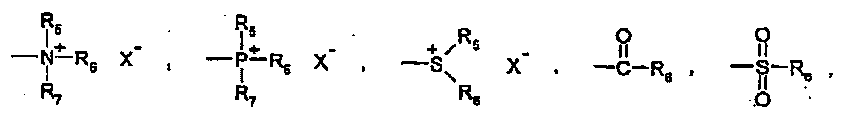 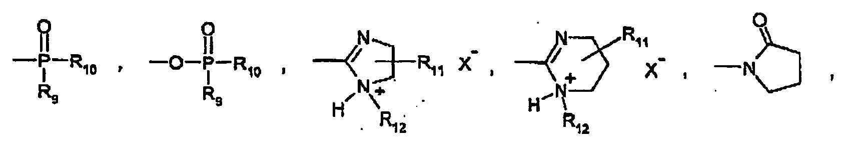 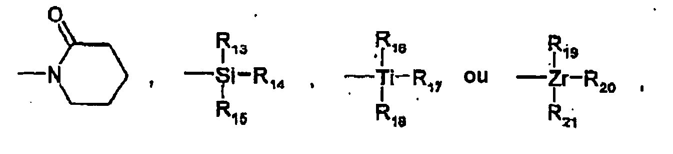 dans laquelle,
R₁ est C₁-C₁₈alkylène,
R₂ est une liaison directe ou C₁-C₁₈alkylène,
R₃ est hydrogène ou C₁-C₈alkyle,
R₄ est hydrogène ou C₁-C₄alkyle,
R₅, R₆ et R₇ sont chacun indépendamment les uns des autres hydrogène, C₁-C₂₅alkyle, phényle ou C₇-C₂₅phénylalkyle,
R₈, R₉ et R₁₀ sont chacun indépendamment les uns des autres hydroxyle, 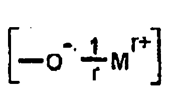 ou 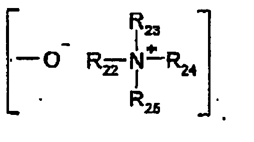
R₁₁ est hydrogène ou C₁-C₂₅alkyle,
R₁₂ est hydrogène ou C₁-C₂₅allyle, C₃-C₂₅alkyle interrompu par oxygène, soufre
ou par 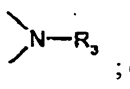 ou C₂-C₂₄alkényle,
R₁₃, R₁₄ et R₁₅ sont chacun indépendamment les uns des autres halogène, amino, C₁-C₂₅alcoxy ou C₁-C₂₅alkyle, à condition qu'au moins un radical de R₁₃, R₁₄ et R₁₅ soit différent de C₁-C₂₅alkyle,
R₁₆, R₁₇ et R₁₈ sont chacun indépendamment les uns des autres C₁-C₁₂alcoxy ou C₂-C₂₅alkanoyloxy,
R₁₉, R₂₀ et R₂₁, sont chacun indépendamment les uns des autres C₁-C₁₂alcoxy, C₂-C₂₅alkanoyloxy ou benzoyloxy,
R₂₂, R₂₃, R₂₄ et R₂₅ sont chacun indépendamment les uns des autres hydrogène, C₁-C₂₅alkyle ou C₂-C₂₄alkyle substitué par hydroxyle
M est un cation métallique r-valent,
X⁻ est fluor, chlore, brome, iode, nitrite, nitrate, hydroxyde, acétate, sulfate d'hydrogène, sulfate, sulfate de méthyle ou des mélanges de ceux-ci, et
r est 1, 2 ou 3.

15. Procédé de stabilisation, d'ignifugation et/ou de compatibilisation d'un matériau organique qui est sujet à une dégradation oxydante, thermique ou induite par la lumière, qui consiste à incorporer une protéine, ou à appliquer sur sa surface, au moins un composant (b) selon la revendication 1.

16. Procédé destiné à photoinitier *in situ* la polymérisation ou à durcir un nano-composite ou une sol pré-polymérique en un matériau nano-composite, qui consiste à incorporer une protéine, ou à appliquer sur sa surface, au moins un composant (b) selon la revendication 1.

17. Utilisation du composant (b) selon la revendication 1 en tant que stabilisant et/ou ignifugeant et/ou compatibilisateur pour des matériaux organiques qui sont sujets à une dégradation oxydante, thermique ou induite par la lumière.

18. Utilisation du composant (b) selon la revendication 1 en tant que photoinitiateur pour la polymérisation *in situ* ou le durcissement de nano-composites ou de sols pré-polymériques en des matériaux nano-composites.
